(19) Europäisches Patentamt
European Patent Office
Office européen des brevets

(11) EP 4 654 620 A1

(12) EUROPEAN PATENT APPLICATION

(43) Date of publication:
**26.11.2025 Bulletin 2025/48**

(21) Application number: **24177255.7**

(22) Date of filing: **22.05.2024**

(51) International Patent Classification (IPC):
***H04W 4/02*** *(2018.01)* ***H04W 4/33*** *(2018.01)*
***H04W 4/70*** *(2018.01)*

(52) Cooperative Patent Classification (CPC):
**H04W 4/023; H04W 4/33; H04W 4/70;** H04W 4/026

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP USA, Inc.**
**Austin TX 78735 (US)**

(72) Inventor: **Barbaric, Tvrtko**
**AG5656 Eindhoven (NL)**

(74) Representative: **Miles, John Richard**
**NXP Semiconductors**
**Intellectual Property Group**
**The Cattle Barn, Upper Ashfield Farm**
**Hoe Lane**
**Romsey, Hampshire SO51 9NJ (GB)**

# (54) METHOD FOR DETERMINING A FLOORPLAN USING A WIRELESS NETWORK

(57) A method and apparatus for determining a floorplan of a building comprising a wireless network is disclosed. The wireless network includes a wireless network control device and a further plurality of devices having an associated device type value. Each device has a device position parameter, a device type value, and at least one of a device orientation parameter and a device distance parameter. One or more device space distance parameter values is provided for some device type values which corresponds to the distance to a physical object ( e.g., wall, floor, ceiling). The method further includes determining, by the control device, a floorplan of the building from the device space distance parameter, the device position parameter, the device type value and at least one of a device orientation parameter and a device distance parameter; and assigning the plurality of devices to spaces in the floorplan.

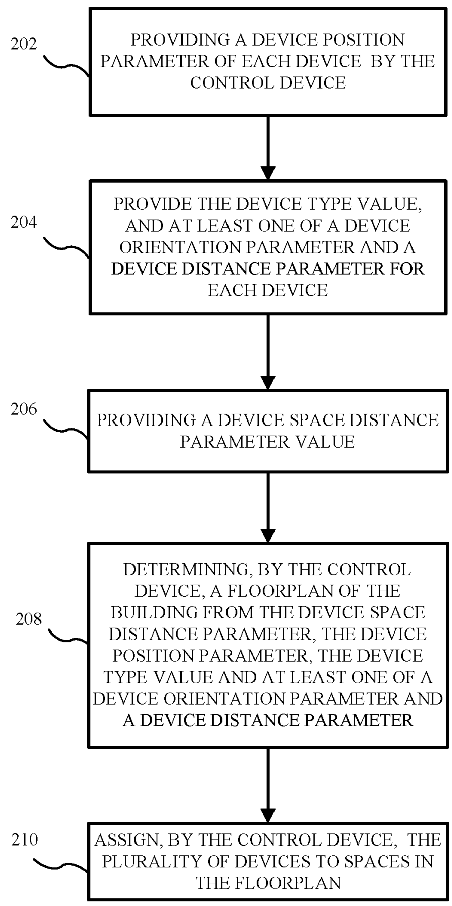


200

FIG.4

EP 4 654 620 A1

## Description

FIELD

This disclosure relates to a method for determining a floorplan using a wireless network comprising a plurality of devices . This disclosure further relates to a wireless network comprising a plurality of devices and including a controller device configured to determine a floorplan.

BACKGROUND

An internet of things (IoT) system for building control and automation may be implemented as a number of devices (nodes) in a personal area network. Personal area networks (PAN) such as ZigBee, WiFi or Thread networks operating according to the IEEE 802.15.14 standard or IEEE 802.11 family of standards typically consist of a number of low power devices which may also be referred to as IoT devices. Such devices may be located throughout a building and perform different functions such as energy monitors, wireless light switches, and sensors. The functionality of the device may be predefined as part of the device specification as required for example by devices complying with the Matter specification.

For many applications of a wireless IoT device network in a building the IoT system requires knowledge of the location of IoT nodes within a building. This is done using a manual configuration of devices located in a building, predominantly by either dedicated numbering scheme (e.g., "3-1-27" for Building 3, Floor 1, Room 27) or descriptive labeling (e.g., "Living room").

SUMMARY

Aspects of the disclosure are defined in the accompanying claims. In a first aspect, there is provided a method for determining a floorplan of a building comprising a wireless network, the wireless network comprising a plurality of devices, each device having an associated device type value , the plurality of devices further comprising a control device, the method comprising: providing, by the control device, a device position parameter of each device of the plurality of devices; providing the device type value, and at least one of a device orientation parameter and a device distance parameter for each of the plurality of devices; providing a device space distance parameter value corresponding to a distance to a physical object, the device space distance parameter value being associated with a device type value; determining, by the control device, a floorplan of the building from the device space distance parameter, the device position parameter, the device type value and at least one of a device orientation parameter and a device distance parameter; and assigning, by the control device, the plurality of devices to spaces in the floorplan.

In some embodiments, determining the floorplan further comprises the steps of providing, by the control device: a positional dataset of the plurality of devices, the positional dataset comprising the device position parameter and the device type value of each device of the plurality of devices; a plurality of expected device combinations, each expected device combination having at least one associated device type value and at least one of the device orientation parameter and the device distance parameter; determining, by the control device, a set of combinations of devices in the positional dataset from the plurality of expected device combinations.

In some embodiments, the method further comprises determining, by the control device, an expected orientation of combinations of devices in the set of combinations of devices.

In some embodiments, the method further comprises determining, by the control device, a plurality of vertical planes and a plurality of horizontal planes from the set of combinations of devices, each vertical plane and horizontal plane having at least one associated combination of devices of the set of combinations of devices.

In some embodiments, the method further comprises determining, by the control device, a location of at least one of a vertical floorplan element and a horizontal floorplan element from the space distance parameters of the associated combination of devices of the plurality of vertical and horizontal planes.

In some embodiments, the method further comprises determining a plurality of vertical floorplan elements and a plurality of horizontal floorplan elements, and determining the floorplan from an intersection of the plurality of vertical floorplan elements and the plurality horizontal floorplan elements.

In some embodiments, the device orientation parameter defines whether the set of combinations of devices are arranged on a vertical plane or a horizontal plane. In some embodiments, the device orientation parameter defines a direction between devices in the expected combination. In some embodiments, the distance parameter defines an expected distance between devices in the set of combinations of devices. In some embodiments, determining the set of combinations of devices in the positional dataset from the plurality of expected device combinations further comprises: selecting an expected device combination from the plurality of expected device combinations; matching an initial subset of the plurality of devices to the selected expected combination based on the respective device type value; calculating one or more distance values between devices in the subset of the plurality of devices; comparing the one or more distance values with the distance parameter of the selected expected combination; and assigning devices to the set of combinations of devices based on the comparison.

In some embodiments, determining the set of combinations of devices in the positional dataset from the plurality of expected device combinations further comprises: selecting an expected device combination from the plurality of expected device combinations; matching an initial subset of the positional dataset to the selected expected combination based on the respective device type value; calculating orientation parameters for devices in the initial subset; comparing calculated orientation parameters with the orientation parameter of the selected expected combination; and assigning devices to the set of combinations of devices based on the comparison.

In some embodiments, the method comprises determining, by the control device, at least one vertical plane and at least one horizontal plane from the set of combinations of devices further comprises: calculating a plane vector to define a plane for a combination in the set of combinations; and determining whether the combination is a candidate horizontal plane or a candidate vertical plane from the orientation parameter of the corresponding expected combination.

In some embodiments, the method comprises determining a plurality of candidate horizontal planes; comparing an alignment of the candidate horizontal planes; and discarding candidate horizontal planes that are not aligned within a tolerance value.

In some embodiments, the method comprises determining a plurality of candidate vertical planes; comparing an alignment of the candidate vertical planes; comparing the orthogonality of the candidate vertical planes; and discarding candidate vertical planes that are not aligned or are not orthogonal within a tolerance value.

In some embodiments, the method comprises changing an operation mode of at least one device of the plurality of devices dependent on the location of the at least one device within the floorplan.

In a second aspect, there is provided a wireless network control device for a wireless network comprising a plurality of devices, the wireless network control device configured to : determine a device position parameter of each device of the plurality of devices; receive a device type value, and at least one of a device orientation parameter and a device distance parameter for each of the plurality of devices; receive a device space distance parameter value corresponding to a distance to a physical object, the device space distance parameter value being associated with a device type value; determine a floorplan of the building from the device space distance parameter, the device position parameter, the device type value and at least one of a device orientation parameter and a device distance parameter; and assign the plurality of devices to spaces in the floorplan.

In some embodiments, the wireless network control device is further configured to: determine a positional dataset of the plurality of devices, the positional dataset comprising the device position parameter and the device type value of each device of the plurality of devices; receive a plurality of expected device combinations, each expected device combination having at least one associated device type value and at least one of the device orientation parameter and the device distance parameter; determine, by the control device, a set of combinations of devices in the positional dataset from the plurality of expected device combinations.

In some embodiments, the wireless network control device is further configured to: receive an expected orientation of combinations of devices in the set of combinations of devices; determine a plurality of vertical planes and a plurality of horizontal planes from the set of combinations of devices, each vertical plane and horizontal plane having at least one associated combination of devices of the set of combinations of devices; determine a location of at least one of a vertical floorplan element and a horizontal floorplan element from the space distance parameters of the associated combination of devices of the plurality of vertical and horizontal planes; determine a plurality of vertical floorplan elements and a plurality of horizontal floorplan elements; and determine the floorplan from the intersection of the plurality of vertical floorplan elements and the plurality horizontal floorplan elements.

In some embodiments, the device orientation parameter defines whether the devices in the expected combination are arranged on a vertical plane or a horizontal plane. In some embodiments, the wireless network control device is further configured to control at least one device of the plurality of devices to change an operation mode dependent on the location of the at least one device within the floorplan.

## BRIEF DESCRIPTION OF THE DRAWINGS

In the figures and description like reference numerals refer to like features. Embodiments are now described in detail, by way of example only, illustrated by the accompanying drawings in which:

Figures 1A, 1B and 1C show different network topologies for a network.

Figure 2 illustrates an example wireless network control device which may be configured to determine a floorplan of a building according to one or more embodiments.

Figure 3 illustrates a co-ordinate system for defining a floorplan.

Figure 4 shows a method of determining a floorplan according to an embodiment.

Figure 5 illustrates a method of determining a floorplan according to an embodiment.

Figure 6 shows a method of identifying combinations of devices for the methods of figure 4 and figure 5 according to an embodiment.

Figure 7 shows an example combination of devices.

Figure 8 shows an example of multiple solutions for a candidate plane occupied by identified combination of devices.

Figure 9 shows a method of calculation of combination vectors for devices in each identified combination of devices according to an embodiment.

Figure 10 illustrates a method of determining if candidate planes are vertical or horizontal planes according to an embodiment.

Figure 11 illustrates an example method of determining of refining candidate vertical planes according to an embodiment.

Figure 12 illustrates an example method of determining of refining candidate horizontal planes according to an embodiment.

Figure 13 shows example orientation of identified vertical and horizontal planes with respect to true vertical and horizontal according to an embodiment.

Figure 14A and Figure 14B illustrates a method of aligning the identified vertical and horizontal planes with respect to true vertical and horizontal according to an embodiment.

Figure 15 shows a method for further refining the candidate horizontal planes according to an embodiment.

Figure 16 shows a method for further refining the candidate vertical planes according to an embodiment.

Figure 17 shows a method for assigning vertical and horizontal planes to space according to an embodiment.

Figure 18A illustrates an example identification of candidate vertical planes.

Figure 18B illustrates an example identification of candidate vertical planes populated with device locations.

Figure 18C illustrates an example identification of wall sections from candidate vertical planes.

Figure 18D illustrates the floorplan of figure 18C with identified floorplan elements.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION OF EMBODIMENTS

Figures 1A, 1B, 1C shows example topologies of various different networks such as ZigBee networks. Figure 1A shows a star network 100 with the device 102 at the center connected to a number of devices 104. Figure 1B shows a mesh network 110 with the device 102, a number of devices 106 and devices 104. Figure 1C shows a cluster tree network 120 with the device 102, a number of devices and devices 104. In IoT networks located in buildings these devices may be located throughout the building. Depending on the required functionality, some devices may be more likely to be located on floors, walls or ceilings.

In each of the networks 100, 110, 120, there is a single device 102 which forms the root of the network tree. The device 102 typically stores information about the network, including acting as the trust center and repository for security keys. The devices 106 may execute an application function and also act as routers within the networks 110,120 passing data on to other devices 106 and devices 104. A device 104 cannot relay data from other devices but only communicate with one parent device which is either a device 106 or device 102. A device 104 may be battery powered and may "sleep" for long periods of time to preserve battery life. Network connectivity information may be stored in neighbor tables for each device 102 and device 106.

Figure 2 illustrates an example implementation of a network device 130 including a processor 132 having a connection 136 to memory 134. The processor 132 has a further connection 142 to a transceiver 140 having an antenna 138. The transceiver 140 may support communication using Zigbee and/or communication using Bluetooth protocols such as BLE, Thread, WiFi or Z-Wave.

In embodiments, one of the nodes or devices on the network may be considered to be a wireless network control device. In some examples the control device may not be an IoT device but may be a separate device connected to the network able to access various parameters from the other devices on the network. Each device on the network may have certain predefined parameters relating to that device for example with reference to network device 130 which may be stored in memory 134. These predefined parameters may for example be accessed (received) by a control device to determine a building floorplan according to one or more embodiments described herein. Other parameters relating to each network device may be determined by that network device and accessed by the control device or may be determined by the control device. The control device may be either local or remote. Remote network mapping through a control device not physically connected to the mapped network enables centralized mapping and monitoring of network device locations in commercial applications beyond a smart home use cases. This can be used for network maintenance and coordinated setup between physically present installers and remote teams.

The present disclosure provides a method and apparatus of identifying a floorplan of a building or other structure on or in which an IoT network is located. The method and apparatus allow the floorplan in which devices of an IoT network are located to be mapped together with the position of those devices in three-dimensions with sufficient accuracy for use by further applications.

Each device in the wireless network is a physical unit comprising electronic components providing the hardware and software functionality required. A single device may comprise one or more functions.

For devices with multiple functions, the physical device in a wireless network may have a primary functionality. This primary functionality determines the device type value and is associated with the device position parameter of the device. Similarly, any rules such as mounting rules or building codes defining the relationship to physical objects and relationship to other devices will be based upon the primary device type. For devices with multiple functions, any additional functions inherit the parameters of the primary device type.

Methods and apparatus described herein use a device type value, a device position parameter which may be typically a set of coordinates, a definition of a relationship to a physical object or objects (the space distance parameter) and a definition of a relationship or relationships to other devices (device orientation and device distance parameters). Optionally, other predetermined or calculated parameters for each node in an IoT network may be used for further refinement of the identified floorplan as described herein.

Documentation of the device functionality is a mandatory requirement for the functionality integration into an IoT network. The device type value as referred to herein is a parameter that represents the functionality of the device. An example of such functionality as described in the Matter 1.x specification. The position of devices in 3D space may be predetermined. For example, the device position may be determined automatically by the method described in European Patent Application 23190216.4 which may be used in conjunction with the methods and apparatus described herein.

Floorplan elements are considered to be walls (vertical planes), floors and ceilings (horizontal planes) and those elements have a default orientation in the physical space. Those floorplan elements may have specific relationship or relationships to IoT device or devices, depending on the type of device and the installation context. Based on that relationship or relationships, positional information of the device can be applied to determine the position of the floorplan element or elements via device's space position parameter. For purposes of methods described here the walls are assumed to be perpendicular to each other.

The definition of the default orientation also referred to as an expected orientation of physical objects used for determining the floorplan may use any notation suitable for defining a plane in 3D space. This notation may be used to define a device orientation parameter, for example with vectors using the normal vector to the plane and one point on the plane. Figure 3 shows a coordinate system 140 illustrating horizontal and vertical planes and the associated x,y,z axes. Any object with a vector perpendicular to the y/z plane is considered vertical and any object with a vector perpendicular to the x/y plane is considered horizontal.

For example, a point used for the plane description may be defined as always being the origin $P_0 = (0,0,0)$. The corresponding normal vector defining vertical plane is then $\vec{v} = (1,0,0)$ and normal vector describing horizontal plane can be $\vec{h} = (0,0,1)$ or $\overline{h} = (0,0,-1)$. This example definition for the location parameter also establishes the relationship between physical objects since a wall is perpendicular to ceiling because their associated plane vectors are perpendicular to each other.

Optionally, an installation context may be defined that may improve the determination time for the floorplan. The IoT system installation context may define the nature of the IoT installation itself, for example a residential single family, residential multi-unit, commercial, hospitality, industrial or of some other type of building or a structure. For a set context, properties and relationships between different elements used for floorplan outline construction may be defined differently and more accurately than in a generic case. Practically, a set context may result in separate definitions of expected combinations and relationships of devices between themselves and devices and objects.

For an example of the context, an IoT device may be a smoke detector. In a multi-story single family building, the layout of the floors may be different as those floors serve different purposes. The position of smoke detectors is going to follow the layout of the floors, meaning the likelihood of a vertically aligned smoke detectors is marginal. In a multi-apartment complex, each storey is a separate unit, but with same room layout on all floors and consequently more likely to have vertically aligned smoke detectors. Defining the context of the installation may reduce the number of possibilities that need to be calculated.

Devices (nodes) in an IoT network can also have positional and orientational relationship to other devices. If two or more devices are expected to be a specific distance from each other, this distance reflects certain expected combination. This distance can be mandated by a building code or can represent a typical use combination. For example, a building code might mandate smoke detectors separated by a certain distance on an office ceiling, or electric wall plugs might have a defined distance on a continuous wall. Because of the known orientation in space of those devices, the vector between them can be assigned the orientation of the physical space. Those known combinations of devices (nodes), referred to herein as expected combinations may be provided as context-specific or generic.

Methods of floorplan identification described herein may refer to a position and relationship of IoT devices defined in two coordinate systems. Firstly, a 3D map coordinate (position parameter) system with coordinates derived by the positioning algorithm used. This coordinate system does not have any determined alignment with actual vertical and horizontal surfaces of a building and may be referred to herein as the positioning coordinate system (PCS). Secondly a coordinate system used for describing the properties of elements and devices. This coordinate system shows correct orientation of elements and devices with respect to actual vertical and horizontal surfaces of a building but lacks position data and may be referred to herein as the orientation coordinate system (OCS).

An example implementation of a database containing the information about expected device combinations is defined in OCS and may contain following information about every expected combination, either context specific or generic:

1) Number of devices in a combination
2) A unit vector orthogonal to device plane (where meaningful) in OCS
3) Type (function) of all devices in the combination
4) Unit vector in direction of the next device in the data structure in OCS
5) Expected distance to next device in the data structure

This may be denoted for example by a data structure of the form:

$$Combination(i).devicecount$$

$$Combination(i).normalvector$$

$$Combination(i).device(j).type$$

$$Combination(i).device(j).vector \qquad <= towards\ (j+1)\ device$$

$$Combination(i).device(j).distance \qquad <= to\ (j+1)\ device$$

Possible expected combinations may include arbitrary combinations of two or more devices defined by device types, unit vectors between devices, and expected distance between devices. For example, for two devices, the data structure is populated as below:

$$Combination(i).devicecount = 2$$
$$Combination(i).device(1).type = type1$$
$$Combination(i).device(2).type = type2$$

$$Combination(i).device(1).vector = unit\ vector\ \overrightarrow{12}\ in\ OCS$$
$$Combination(i).device(1).distance = expected\ absolute\ distance\ between\ device(1)\ and\ device(2)$$

Other possible expected combinations include a number of devices defining a plane. Independent of distance or vector orientation between them, a specified number of devices can build a plane. In a special case which may be denoted by *devicecount* = 0, any number of devices may be used to define a plane.
For example, three devices of types *type1* in a plane defined by the vector in the dataset may be represented by the following data structure:

$$Combination(i).devicecount = 3$$
$$Combination(i).normalvector = plane\ normal\ unit\ vector\ in\ OCS$$
$$Combination(i).device(1).type = type1$$

As a further example, three devices of *type1* and/or *type2* in a plane may be defined by the vector in the dataset:

$$Combination(i).devicecount = 3$$
$$Combination(i).normalvector = plane\ normal\ unit\ vector\ in\ OCS$$
$$Combination(i).device(1).type = type1$$
$$Combination(i).device(2).type = type2$$

Any number of devices of *type1* in a plane defined by the vector in the dataset:

$$Combination(i).devicecount = 0$$
$$Combination(i).normalvector = plane\ normal\ unit\ vector\ in\ OCS$$
$$Combination(i).device(1).type = type1$$

Any combination of the above:

$$Combination(i).devicecount = 2$$

$$Combination(i).normalvector = unit\ vector\ in\ OCS\ orthogonal\ to\ a\ plane\ containing\ 1\ and\ 2$$

$$Combination(i).device(1).type = type1$$

$$Combination(i).device(2).type = type2$$

$$Combination(i).device(1).vector = unit\ vector\ \overrightarrow{12}\ in\ OCS$$

$$Combination(i).device(1).distance = absolute\ expected\ distance\ between\ device(1)\ and\ device(2)$$

Subsets of acceptable expected combinations are not valid without separate definition. This means that a defined combination of devices A-B-C does not imply A-B (without presence of C) is valid too. For A-B to be valid, a separate allowable combination definition needs to be made.

Any of IoT devices may have a space distance parameter or parameters defined. This set of attributes is typically associated with a certain device type value and specifies the distance to basic horizontal floorplan elements and vertical floorplan elements:

$$Device(i).WallDistance=value$$

$$Device(i).FloorDistance=value$$

$$Device(i).CeilingDistance=value$$

Figure 4 shows a method of determining a floorplan 200 with an IoT network according to an embodiment. In step 202, for each device, a device type value and a device position parameter are provided by the control device. In step 204, the device type value and at least one of a device orientation parameter (for example a vector) and a device distance parameter is provided. In step 206, a device space distance parameter value is provided as previously described.

In step 208, the control device may determine a floorplan of the building from the device space distance parameter, the device position parameter, the device type value and at least one of a device orientation parameter and a device distance parameter.

In step 210 the control device may assign a plurality of device to spaces in the floorplan. At least one physical vertical plane and at least one physical horizontal plane may be determined from the device properties of the expected combinations.

In step 210 the position of at least one of a vertical floorplan element and a horizontal floorplan element of the building in which the nodes are located may be determined from the at least one vertical plane and at least one horizontal plane determined in step 210. The method may be repeated iteratively to identify multiple horizontal and vertical planes corresponding to floors, ceilings and walls and thereby floorplan from the identified floorplan elements. The identified floorplan elements may be used to identify the location of the nodes in the wireless network.

Figure 5 shows an example method for determining a floorplan with an IoT network according to an embodiment. In step 252, a positional dataset of devices is provided, each device information including at least a device position parameter and device type value. In step 254 , expected combinations of devices are provided, with all available information as described previously. In step 256, and for every provided expected combination, sets combinations within the positional dataset may be identified. In step 258, for every previously identified combination, presumably vertical or horizontal vectors may be calculated as far as included within the expected combination provided. In step 260, all previously identified potentially vertical or potentially horizontal vectors are combined into a list of vertical and horizontal plane candidates. In step 262 multiple horizontal and vertical planes may be identified corresponding to floors, ceilings and walls and thereby determine floorplan from the identified floorplan elements. The identified floorplan elements may be used to identify the location of the devices in the wireless network.

Figure 6 shows a method of determining a floorplan with an IoT network according to an embodiment 300. In step 302, the method may identify expected combinations of devices in the positional dataset of devices. The positional dataset of devices is understood to refer to the list of devices for which positional data (i.e., x,y,z coordinates) are known. In step 304 combination vectors may be determined for the expected combinations of nodes. These combination vectors may be populated in the expected combinations if they point in the vertical or horizontal direction. Any expected combination identified within positional dataset and with combination vector or vectors populated may be used to determine a candidate plane with vertical or horizontal orientation. A candidate plane with horizontal or vertical orientation can be described by either a plane normal vector or a unit vector pointing in a horizontal or vertical direction and one associated point, as described in expected device combinations. In step 306 the method may determine which of the candidate horizontal planes defined by vertical vectors point in a similar direction.

In step 308, the method may check the orthogonality of candidate vertical planes with candidate horizontal planes and discard planes that or not mutually orthogonal within an error margin or tolerance.

In step 310 the method may rotate whatever coordinate system has been used to calculate the combination vectors to align it with the true vertical and true horizontal orientation of the building derived from the orientation parameter of the nodes.

In step 312 remaining vertical and horizontal planes may be identified from nodes which are not assigned to any of the already determined vertical and horizontal planes. This may be done be using space distance parameters of devices. For example, a "smart" wall plug may be positioned on a wall and may have a specified nonzero distance from a floor or ceiling.

In step 314 floorplan elements may be determined from vertical and horizontal planes and some horizontal and vertical planes which are not deemed to be on floorplan elements may be discarded. This may be determined for example from properties of devices which are typically placed on a wall (e.g., plug, light switch) or ceiling (e.g., smoke detector). In addition, the spaces may be determined by determining where vertical planes intersect.

Methods 250, 300 may identify defined device combinations with defined distance relationships. For example, an initial subset of the positional dataset may be matched based on the devices type value and then the distances between devices in the initial subset may be compared to the expected distances in the expected combination. The comparison may have to account position measurement accuracy and variations in physical mounting of devices.

$$d = \sqrt{(x_{j+1} - x_j)^2 + (y_{j+1} - y_j)^2 + (z_{j+1} - z_j)^2}$$

and considering the measurement and mounting and measurement distance tolerance $t_d$:

$$[(1 - t_d) \times d] \leq Combination(i).device(j).distance \leq [(1 + t_d) \times d]$$

where $0 \leq t_d$

Calculations described in methods in this disclosure may be repeated with varying values for $t_d$ as mounting and measurement errors are generally unknown.

For the example in Figure 7 which shows a room 350 including a door lock device 352, and two door_window_sensor devices 354, 356, only one of which ( door_window_sensor 354 ) is configured as a door sensor, the allowable combination may be defined as below:

*Combination(1).devicecount=2*

*Combination(1).device(1).type=door_lock*

*Combination(1).device(1).distance= r*

*Combination(1).device(1).vector=(0,0,1)* *<= vertical, pointing upwards*

*Combination(1).device(2).type=door_window_sensor*

The methods 250, 300 would calculate two possible solutions as both door/window sensors are in the distance r from the door lock. One of them may later be discarded as invalid because of the non-vertical orientation of the pair of devices 352, 356.

For example, an initial subset of the positional dataset may be matched based on the devices type value and then the orientation parameter may be compared to the orientation parameters in the expected combination. Figure 8 shows an example illustration 360 of possible solutions for combinations of 8 devices labelled A-H for which plane normal i.e., an orientation parameter is available. The eight devices shown in 362 are distributed over two horizontal planes. The correct identification of the planes is shown in 364. Other possible planes that are valid solutions are shown in 366, 368 due to the lack of knowledge of the correct vertical orientation initially.

A corresponding expected combination would define a plane with any number of devices of same type (with same function) forming a horizontal plane:

*Combination(1).devicecount=0*

*Combination(1).device(1).type=smoke_sensor*

*Combination(1).normalvector=(0,0,-1)* *<= vertical, pointing downwards, indicating top of the space mounting*

Figure 9 shows a method 400 which may determine vectors for each identified combination of nodes in the IoT network. The vector calculation is done in the PCS coordinate system as each node has the location information available in PCS. For any two points A and B with a formula

$$\overrightarrow{AB} = (x_B - x_A, y_B - y_A, z_B - z_A)$$

For any three points defining a plane by identifying the normal vector for that plane

$$\overrightarrow{AB} = (x_B - x_A, y_B - y_A, z_B - z_A)$$

$$\overrightarrow{BC} = (x_C - x_B, y_C - y_B, z_C - z_B)$$

$$\overrightarrow{AC} = (x_C - x_A, y_C - y_A, z_C - z_A)$$

$$\vec{n} = \overrightarrow{AB}\ x\ \overrightarrow{BC}$$

or

$$\vec{n} = \overrightarrow{AB}\ x\ \overrightarrow{AC}$$

or

$$\vec{n} = \overrightarrow{BC}\ x\ \overrightarrow{AC}$$

It may be understood that the direction of those vectors in OCS is defined in the expected combination dataset. The properties *.vector* and *.normalvector* as explained previously determine their presumed direction, respectively.

Method 400 in Figure 9 is repeated for all devices of the corresponding type within the positional dataset. If for example the positional dataset contains multiple devices of type smoke_sensor, the investigation is performed for all of them separately as a starting point.

The method 400 starts in step 402. In step 404, a next combination of nodes in a list of combination of nodes may be selected. In step 406, the method checks if the device distance parameter for the first device in the $i^{th}$ expected combination is populated i.e., *Combination(i).device(1).distance.* If the device distance parameter is populated, it is going to be used for identification of this expected combination within the positional dataset. Index value j is set to 1 in step 408 and in step 410 the method checks whether *device(j).type* is within expected distance (*device(j).distance*) of *device(j+1).type,* considering the specified tolerance as described before. If it is not within expected distance, the method returns to step 404. If it is within expected distance, then in step 412, and if *.vector* is populated in expected combination, the $\overrightarrow{device(j)device(j+1)}$ vector is calculated. Following step 412, in step 414 the method checks if *Combination(i).device (j+2)* exists i.e., is *Combination(i).devicecount >=j+2.*

If device (j+2) is not in the combination, the method returns to step 404. Otherwise, the index value of j is incremented (step 416) and the method then returns to step 410. Returning to step 406, if the first device distance parameter *Combination(i).device(1).distance* is not populated then this must be a plane definition and in step 418, the method checks whether the device count is greater than zero. If the device count is zero then in step 424 all possible planes are calculated with all combinations of 3 or more devices of type 1 i.e., *combination(i).device(j).type = type 1,* following which the method returns to step 404.

Returning to step 418, if the device count is greater than zero then in step 420 a check is made to determine if there are two types of devices in the combination. If there are, then in step 426, plane vectors in PCS are calculated for combinations of three or more devices of type 1 and type 2 and the method then returns to step 404. Otherwise in step 422 the plane vector is calculated for combinations of three or more type 1 devices and returns to step 404.

As noted previously, the normal vector defining the horizontal plane in OCS can have the z component value defined as 1 or -1. Both of the values are equally suited for the below calculation, and one could use that fact to use this descriptor to identify if devices used to define a horizontal plane are above (on the ground, OCS z=1) or below (mounted on the ceiling, OCS z=-1) the plane. This may make the determination of space for those devices easier.

If two planes are parallel to each other - and all horizontal planes are - then the cosine similarity of their normal vectors is 1 (for vectors pointing in the same direction) and -1 (for the vectors pointing in opposite directions). Consequently, the absolute value of the cosine similarity close to value of 1 indicates vectors of parallel planes.

Given the assumed position inaccuracy and corresponding deviation of normal vectors from vertical alignment, a tolerance $t_p$ is introduced: $0 \leq t_p < 1$. The tolerance gives the system the possibility to compensate for the inaccuracy in device coordinates and consider planes that are approximately parallel to each other as truly parallel. This is because the small angle inaccuracies are not relevant for the floorplan outline. The value for $t_p$ may be different for vertical and horizontal planes comparisons or even for comparisons of different planes of same presumed orientation.

There is a notable difference between vertical and horizontal direction in a floorplan: there can be only one correct solution for vertical vectors (horizontal planes), whereas horizontal vectors (vertical planes) may have multiple correct solutions due to the arbitrary wall orientation. Hence, the calculation is easiest if started with the vertical vectors.

Figure 10 shows a method 500 of determination of vertical and horizontal planes for an IoT network. This method may require knowledge of following information determined for example by methods described and the reference combination data:

- Normal vector in PCS for every possible plane as defined by device combination datasets and identified among installation devices.
- Presumed vector orientation for all of those normal vectors in OCS.
- Direction vectors in PCS of all point combinations as defined by device combination datasets and identified within positional dataset.
- Presumed vector orientation for all of those direction vectors in OCS.

In step 502, the cosine similarity may be calculated for a candidate horizontal or vertical plane with respect to at least one further candidate horizontal or vertical planes. In step 504 the cosine similarity may be compared with a threshold value $t_p$ determined by the tolerance. If the cosine similarity is within the threshold value method proceeds to step 506 and the candidate plane is retained as a candidate horizontal plane for the current set. Returning to step 504, if the cosine similarity is not within threshold value the method proceeds to step 508 and the candidate horizontal/vertical plane is discarded from the list of candidate planes for the current comparison process step i.e., the current set:

$$\left|S_C\left(\overrightarrow{h_1}, \overrightarrow{h_2}\right)\right| < (1 - t_p) \text{ where } 0 \leq t_p < 1$$

The discarded candidate may be included when the method 500 is repeated. Following from steps 506, 508, the method proceeds to the next candidate horizontal/vertical plane (step 510) and then returns to step 502 where the cycle is repeated.

In case the method 500 does not yield expected results within a specific tolerance value $t_p$, the calculation may be repeated with a modified tolerance value. As shown in Figure 7, the plane calculation can produce multiple results, but not all have vectors pointing in the same or opposite directions as most of the solutions are at an angle with respect to the actual horizontal or vertical plane.

Figure 11 shows a method 550 of refining the selection of vertical planes which may be carried out after method 500. In step 552 a candidate vertical plane may be compared for orthogonality with respect to candidate horizontal planes. In step 554, the method checks if the candidate vertical plane is orthogonal with respect to candidate horizontal planes within a tolerance value. If the candidate vertical plane is not orthogonal within a tolerance value, the method proceeds to step 564 and the candidate vertical plane is discarded. Otherwise, returning to step 554 if the candidate vertical plane is orthogonal within a tolerance, the method proceeds to step 556 and the candidate vertical plane is compared for orthogonality with respect to other candidate vertical plane sets. Following from step 556, in step 558 a comparison is made to check whether the conduct candidate vertical plane is orthogonal to at least one other candidate vertical plane within a tolerance value. If it is orthogonal then the method proceeds to step 562 and the candidate vertical plane is retained in the candidate vertical plane list. Otherwise, the method proceeds to step 560 where a check is made between the candidate vertical plane and other vertical planes to see whether or not they are parallel to each other within a tolerance. If they are parallel, the candidate vertical plane is retained in step 562, otherwise the candidate vertical plane is discarded for the current process (step 564) although it may be used when the method is re-run iteratively.

Figure 12 shows a method 600 of refining the selection of horizontal planes which may be carried out following method 500. In step 602 a candidate horizontal plane may be compared for orthogonality with respect to candidate vertical planes. In step 604 a comparison is made to check if the candidate horizontal plane is orthogonal within a tolerance value. If it is not orthogonal, the candidate horizontal plane is discarded (step 610). If it is orthogonal, the method proceeds to step 606 and a further check is made to determine whether the candidate horizontal plane is parallel to at least one of the candidate horizontal planes within a tolerance value. If it is parallel, then the candidate horizontal plane is retained in the candidate horizontal plane list (step 608), otherwise the candidate horizontal plane is discarded (step 610) for the current process although it may be used when the method is re-run iteratively.

For all planes available from the expected device combination calculations above, multiple tests can be applied to validate the solutions:

a) If there is a solution or solutions for the horizontal planes, test all vertical planes for the orthogonality against those solutions, and discard non-orthogonal ones:

$$\left|S_C\left(\overrightarrow{h_1}, \overrightarrow{v_1}\right)\right| \leq t_{orth1}, \text{ where } 0 \leq t_{orth1} < 1$$

Where $t_{orth}$ is the tolerance for the orthogonality of horizontal and vertical planes.

b) Out of all vertical planes solutions which are either parallel or orthogonal to all others, discard any not fitting these requirements:

$$|S_C(\overrightarrow{v_1}, \overrightarrow{v_2})| < (1 - t_p) \text{ where } 0 \leq t_p < 1$$

or

$$|S_C(\overrightarrow{v_1}, \overrightarrow{v_2})| \leq t_{orth2}, \text{ where } 0 \leq t_{orth2} < 1$$

This test is based on the fact that walls tend to be in a 90-degree orientation to each other. For simplicity of the process, any walls with different angles are discarded.

After this step is completed, the results may be one or multiple sets of vertical and horizontal planes parallel and orthogonal to each other. Each set represents a possible ceiling/floor/wall solution set. Figure 13 illustrates different possible solutions 650 in PCS space compared to OCS space.

For each identified set of planes, such coordinate rotation can be performed to align the OCS and PCS direction. This rotation is optional, but beneficial as it simplifies calculations in following methods. Figure 14A shows a coordinate diagram 700 illustrating the alignment of the candidate horizontal and vertical planes in PCS with the true horizontal and vertical planes of the building in OCS. Figure 14B shows a method 720 of aligning candidate horizontal and vertical planes with the true horizontal and vertical planes of the building described with reference to coordinate diagram 700. In step 722 (702), the Z-axes of the orientation coordinate system (OCS) which defines the true horizontal and vertical directions of the building is aligned with the coordinate system used for the determination of the candidate horizontal and vertical planes, which may be referred to as the position coordinate system (PCS). In step 724 (704) , the PCS is rotated around the z-axis to align the X and Y axes with the OCS. In step 726 (706) the PCS coordinates are shifted to align the origin with the OCS. In step 728 (708), the origin is shifted to the physical origin.

Figure 15 shows a method 800 of further refining the candidate horizontal plane list according to an embodiment. The positional dataset may include devices which are not included in expected combinations but are expected to be in zero distance to a floor or ceiling. Such devices may imply the existence of a corresponding horizontal plane and so can be added even if only their position is known. The method 800 may be performed after method 700 or independently of method 700. In step 802 the method starts and in step 804 checks whether a device has a floor or ceiling distance property of zero. If the device does not have a floor or ceiling distance property of zero, the method ends (step 812). Otherwise, the method proceeds to step 806 and checks whether the device is located on a current candidate horizontal plane. If it is located on a candidate horizontal plane, the device is added to that candidate horizontal plane (step 810) following which the method ends (step 812). Returning to step 806, if the device is not currently on a candidate horizontal plane, the plane defined by the device is added to the candidate horizontal plane list (step 808).

Figure 16 shows a method 850 of further refining the candidate vertical plane list according to an embodiment. The positional dataset may include devices which are not included in expected combinations but are expected to be located on a wall i.e., has within its space distance parameters a wall distance property of zero. In step 852 the method starts. In step 854, the method checks whether a device has a wall distance property of zero. If the device does not have a wall distance property of zero, the method ends (step 864). Otherwise, the method proceeds to step 856 and checks if the device is on a current candidate vertical plane i.e., a previously identified vertical plane. If the device is on a current candidate vertical plane, the device is added to that candidate vertical plane (step 860) and following from step 860 the method ends (step 864). Returning to step 856, if the device is not on the candidate vertical plane, the method proceeds to step 858 and checks whether at least one other device has the same X coordinate or Y coordinate as the current device being checked. If at least one of the devices does have the same X or Y coordinate, the method proceeds to step 862 and a plane defined by the device and at least one of the devices is added to the candidate vertical plane list i.e., a new candidate vertical plane is identified. The method then ends (step 864). Returning to step 858, if at least one other device does not have either the same X coordinate or the same Y coordinate as the current device being checked step 858, the method ends (step 864).

Methods 800, 850 allow further refinement of the selection of horizontal and vertical planes using the space distance parameter for each device type where available of *Device(i). WallDistance, D evice (i). Floor Distance,* and *Device(i).CeilingDistance.*

Figure 17 shows a method 900 of deriving space boundaries from the candidate vertical and horizontal plane lists. In step 902 candidate vertical and horizontal planes not associated with physical planes are removed, since not all candidate horizontal or vertical planes correspond to the physical locations of walls, floors, or ceilings. Smoke detectors are a good indicator for horizontal plane and ceiling definition, but light switches at the same height could also be used for orientation determination, and they are not in zero distance from the floor or ceiling and hence do not represent a horizontal plane with physical counterpart.

In step 904 a distance check is made between candidate horizontal planes; candidate horizontal planes that are too close together or too far apart may for example be removed as that may indicate that the space height is unrealistic. Installation context or building code rules may be used for this step.

In step 906 vertical wall boundaries per floor may be determined. In a multi-story environment, an identified vertical plane (wall) can be contained to one or multiple floors or spread across all floors. A context of the installation can define this step of the calculation. For example, in a hospitality or multi-apartment residential settings the vertical wall propagation can be set as continuous, because the floorplan of a hotel is going to accommodate same room layout for each floor of interest. In a single home residential setting this simplification cannot be made. Here a more deterministic approach may be used as the floorplan is different on all floors and the vertical wall propagation may be considered for every floor separately as follows. Based on those context dependent rules, a vertical plane can be valid or not valid for a specific space between two horizontal planes.

If a vertical plane vi intersects three different horizontal planes $h_1$, $h_2$, $h_3$ but all the IoT devices with known positions lying on vi (and all IoT devices handled so far are only the ones with at least one of the *Distance* properties equaling zero) are only between two of those planes, then a vertical plane is confirmed only between those two planes and not the others. Repeating this process for other vertical planes results in multiple vertical planes confirmed between two horizontal planes. In order for a vertical plane to be valid between two closest horizontal planes, it is sufficient for this vertical plane to have at least one IoT device with z-coordinate value between those two horizontal planes.

In step 908 the method may check the distance between candidate vertical planes per floor to ensure that they correspond to realistic spaces. With vertical plane candidates per floor established, and based on the context of the calculation, floors and ceilings have minimal distances between them and same applies for parallel walls. Planes with improbable or impossible values can be discarded or carried over as separate solution set for later validation.

In step 910 and using the vertical floorplan elements identified per floor together with device space parameters, the space boundaries may be determined for each floor. With vertical wall boundaries identified, each floor has a set of vertical planes associated with it. In a top view of a floor, those planes can be represented by parallel and orthogonal lines, as depicted in floorplan 910 shown in Figure 18A for a single floor ( horizontal plane H ) which shows vertical planes denoted $V_1$ to $V_7$. This view can be enhanced with known positions of all IoT devices that have zero value for *Distance* property to a wall, represented with device positions 922 in floorplan 920 shown in floorplan 930 Figure 18B. Additionally, information from IoT devices where at least one space distance property is populated but distances are non-zero to all known floorplan elements ( walls, ceilings, floors) can be added, represented with device positions 924 and a circle representing a known distance to a vertical plane. Because of the rotation of the coordinate system and alignment of possible wall directions with the x-axis and y-axis, the determination of the distance to a potential wall is done by subtraction or addition of corresponding coordinate values. This calculation can be performed multiple times with different tolerance values applied to the expected distance, as previously described..

All plane (wall) sections having either one IoT device directly on it or having a unique solution for a IoT device in a specified distance from them, are considered confirmed as illustrated by the solid wall section lines 932 in floorplan 930 of figure 18C.

Referring to figure 18D and floorplan outline 942, in step 912 unassigned devices 942, 944 without any defined location properties may be added to spaces within the determined space boundaries. Because the coordinate system is rotated, this is again just a coordinate value comparison. With conditions for value of z coordinate still valid, every IoT device $D_i$ with x-coordinate value of

$$x_{START} < x_{D_i} < x_{END}$$

and y-coordinate value of

$$y_{START} < y_{D_i} < y_{END}$$

is in the same space with all other devices fulfilling the same requirement, where $x_{START}$, $x_{END}$, $y_{START}$, $y_{END}$ are starting and ending coordinates of a space. AS illustrated, devices 942 fulfil this criteria.

Method steps described may be selectively repeated for complete or partial solution sets to improve the quality of the results. Figures 18A to figure 18D illustrates the representation of the floorplan in two-dimensions. It will be appreciated that the methods also apply to three-dimensional floorplans.

Embodiments described herein may is applicable to any smart home, factory or commercial building with variety of IoT nodes deployed. It is generic in its nature, not assuming any specific use case or network protocol as the required information is agnostic of them.

Consequently, embodiments may be used for an array of applications associated with the understanding of how the spaces where IoT nodes are installed correlate to each other. In one or more embodiments the wireless control device may control an operation mode of one or more other devices dependent on the device location within the building. Some examples include but are not limited to the following applications.

Proactive instead of reactive system behaviour. An example of this is a person walking through the house would have all the lights in front of it turned on, even before the room is entered and the motion sensor triggered.

Automatic complementing of available single IoT device (node) functionality with space functionality. An example is smart speakers distributed over the large space can adjust volume based on presence information from nodes in the same room. Another example is if the temperature in a room increases during a sunny day, the automated system may conclude it is more energy efficient to close the blinds and increase the illumination level in the affected room(s) than to turn on the air-conditioning. A knowledge of how temperature sensors, blinds and lights correlate to each other in a given space is a basic prerequisite for this action.

Automated event consequences interpretation on neighboring spaces. An example is a water leak sensor activation in a multi-floor building would enable the system to understand the consequence of water seeping through the floor; for example, whether there a floor below and, if so, can the system notify the flooding is imminent. Another example is where a fire alarm can be assigned to a space. Consequently, close spaces, including above and below, which did not trigger the alarm yet but are endangered, can be treated differently than the ones not affected or not in proximity.

Automatic, machine processable and human understandable location labeling of all IoT nodes in the installation (‘smoke detector 3 ft left of the entrance door’)

Simplified maintenance of the IoT network with automatic generation of human understandable event descriptions, for example ‘smoke detector 3 ft left of the entrance door needs new batteries soon’.

A method and apparatus for determining a floorplan of a building comprising a wireless network is disclosed. The wireless network includes a wireless network control device and a further plurality of devices having an associated device type value. Each device has a device position parameter, a device type value, and at least one of a device orientation parameter and a device distance parameter. One or more device space distance parameter values is provided for some device type values which corresponds to the distance to a physical object ( e.g., wall, floor, ceiling). The method further includes determining, by the control device, a floorplan of the building from the device space distance parameter, the device position parameter, the device type value and at least one of a device orientation parameter and a device distance parameter; and assigning the plurality of devices to spaces in the floorplan.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data-based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

**1.** A method for determining a floorplan of a building comprising a wireless network, the wireless network comprising a plurality of devices, each device having an associated device type value , the plurality of devices further comprising a control device, the method comprising:

(i) providing, by the control device, a device position parameter of each device of the plurality of devices;
(ii) providing the device type value, and at least one of a device orientation parameter and a device distance parameter for each of the plurality of devices;
(iii) providing a device space distance parameter value corresponding to a distance to a physical object, the device space distance parameter value being associated with a device type value;
(iv) determining, by the control device, a floorplan of the building from the device space distance parameter, the device position parameter, the device type value and at least one of a device orientation parameter and a device distance parameter; and
(v) assigning, by the control device, the plurality of devices to spaces in the floorplan.

**2.** The method of claim 1 wherein determining the floorplan further comprises the steps of providing, by the control device:

(i) a positional dataset of the plurality of devices, the positional dataset comprising the device position parameter and the device type value of each device of the plurality of devices;
(ii) a plurality of expected device combinations, each expected device combination having at least one associated device type value and at least one of the device orientation parameter and the device distance parameter;
(iii) determining, by the control device, a set of combinations of devices in the positional dataset from the plurality of expected device combinations.

**3.** The method of claim 2, further comprising: determining, by the control device, an expected orientation of combinations of devices in the set of combinations of devices.

**4.** The method of claim 3, further comprising determining, by the control device, a plurality of vertical planes and a plurality of horizontal planes from the set of combinations of devices, each vertical plane and horizontal plane having at least one associated combination of devices of the set of combinations of devices.

**5.** The method of claim 4, further comprising determining, by the control device, a location of at least one of a vertical floorplan element and a horizontal floorplan element from the space distance parameters of the associated combination of devices of the plurality of vertical and horizontal planes.

**6.** The method of claim 5, further comprising determining a plurality of vertical floorplan elements and a plurality of horizontal floorplan elements, and determining the floorplan from an intersection of the plurality of vertical floorplan elements and the plurality horizontal floorplan elements.

**7.** The method of any of claims 2 to 6, wherein the device orientation parameter defines whether the set of combinations of devices are arranged on a vertical plane or a horizontal plane.

**8.** The method of any of claims 2 to 7, wherein the device orientation parameter defines a direction between devices in the expected combination.

**9.** The method of any of claims 2 to 8, wherein the distance parameter defines an expected distance between devices in the set of combinations of devices.

**10.** The method of any of claims 2 to 9, wherein determining the set of combinations of devices in the positional dataset from the plurality of expected device combinations further comprises:

(i) selecting an expected device combination from the plurality of expected device combinations;
(ii) matching an initial subset of the plurality of devices to the selected expected combination based on the respective device type value;
(iii) calculating one or more distance values between devices in the subset of the plurality of devices;
(iv) comparing the one or more distance values with the distance parameter of the selected expected combination; and
(v) assigning devices to the set of combinations of devices based on the comparison.

**11.** The method of any of claims 2 to 10, wherein determining the set of combinations of devices in the positional dataset from the plurality of expected device combinations further comprises:

(i) selecting an expected device combination from the plurality of expected device combinations;
(ii) matching an initial subset of the positional dataset to the selected expected combination based on the respective device type value;
(iii) calculating orientation parameters for devices in the initial subset;
(iv) comparing calculated orientation parameters with the orientation parameter of the selected expected combination; and
(v) assigning devices to the set of combinations of devices based on the comparison.

**12.** The method of any of claims 2 to 11 wherein determining, by the control device, at least one vertical plane and at least one horizontal plane from the set of combinations of devices further comprises:

(i) calculating a plane vector to define a plane for a combination in the set of combinations; and
(ii) determining whether the combination is a candidate horizontal plane or a candidate vertical plane from the orientation parameter of the corresponding expected combination.

**13.** The method of any preceding claim further comprising , changing an operation mode of at least one device of the plurality of devices dependent on the location of the at least one device within the floorplan.

**14.** A wireless network control device for a wireless network comprising a plurality of devices, the wireless network control device configured to :

(i) determine a device position parameter of each device of the plurality of devices;
(ii) receive a device type value, and at least one of a device orientation parameter and a device distance parameter for each of the plurality of devices;

(iii) receive a device space distance parameter value corresponding to a distance to a physical object, the device space distance parameter value being associated with a device type value;
(iv) determine a floorplan of the building from the device space distance parameter, the device position parameter, the device type value and at least one of a device orientation parameter and a device distance parameter; and
(v) assign the plurality of devices to spaces in the floorplan.

**15.** The wireless network control device of claim 14 further configured to control at least one device of the plurality of devices to change an operation mode dependent on the location of the at least one device within the floorplan.

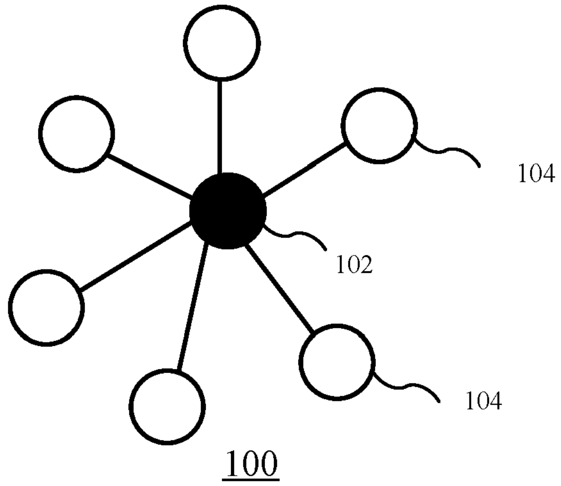


100
**FIG. 1A**

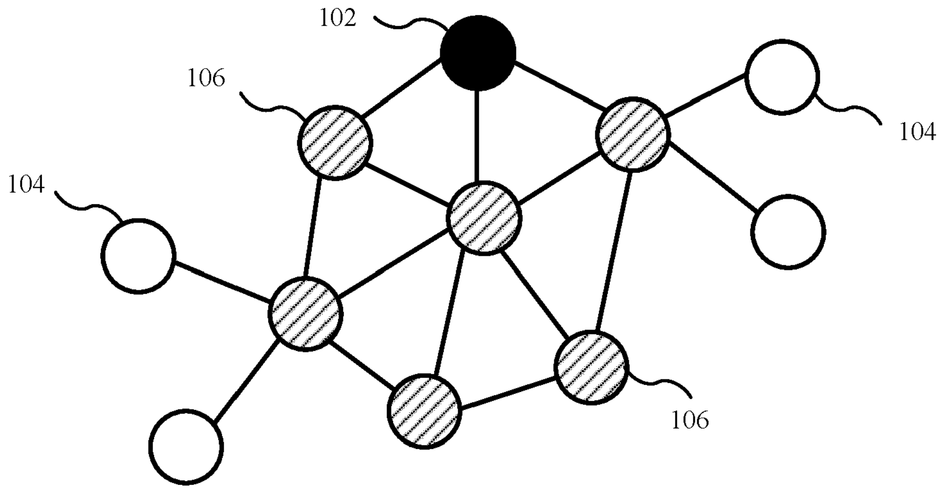


110
**FIG. 1B**

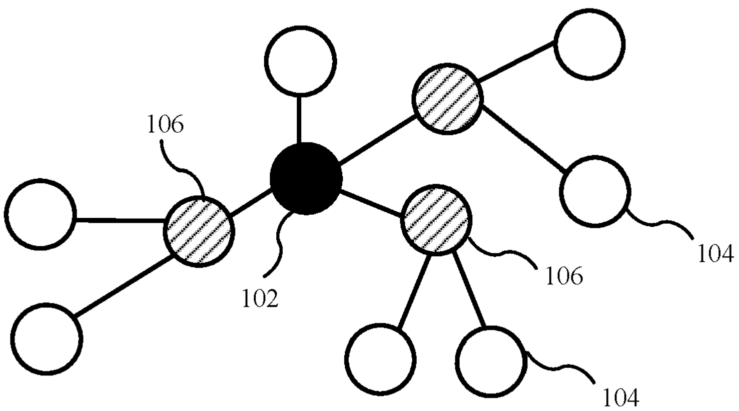


120
**FIG. 1C**

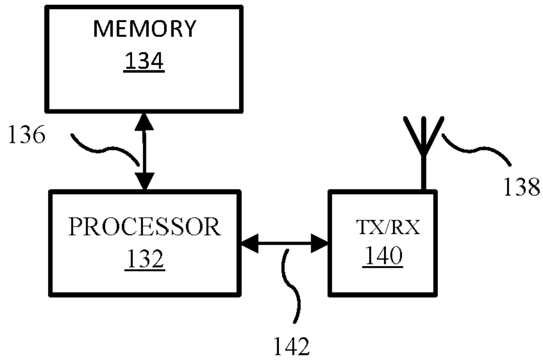


130

**FIG. 2**

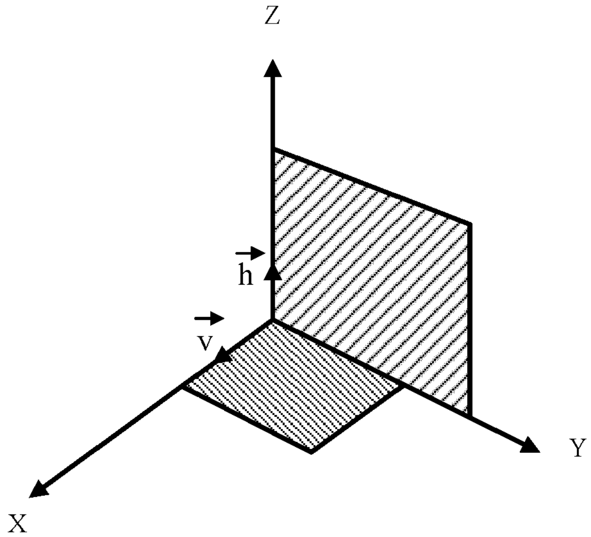


140

**FIG. 3**

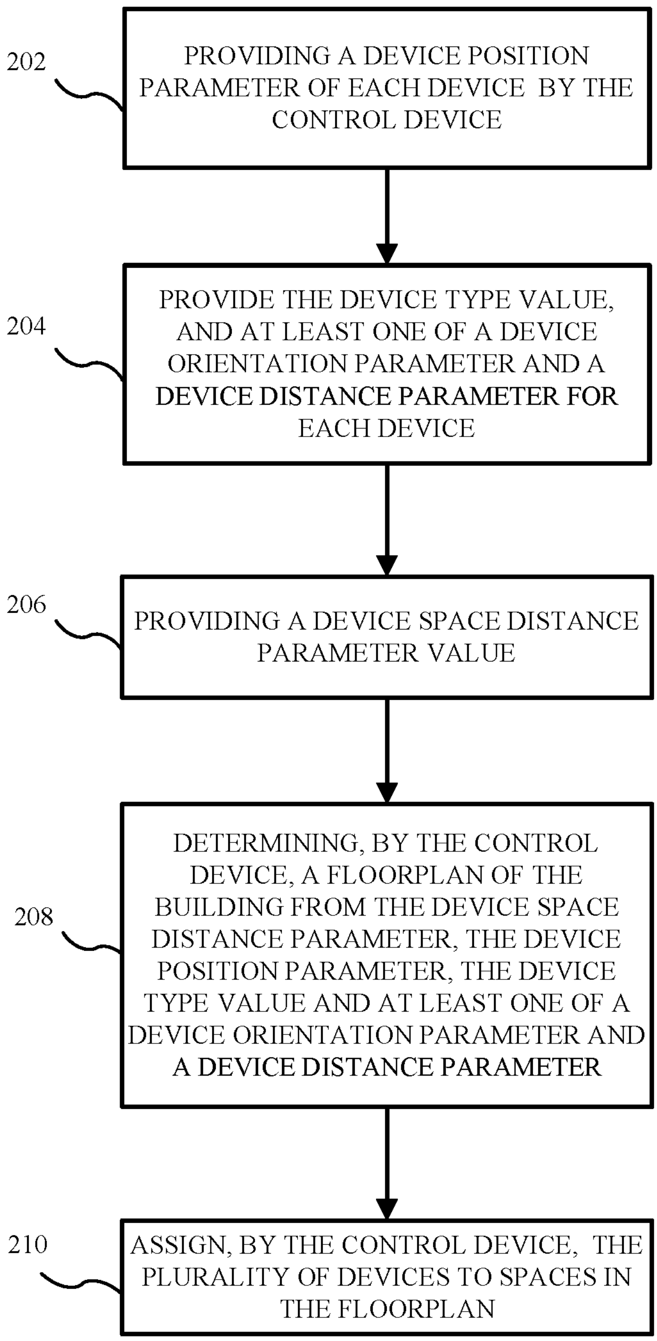

202
PROVIDING A DEVICE POSITION PARAMETER OF EACH DEVICE BY THE CONTROL DEVICE
204
PROVIDE THE DEVICE TYPE VALUE, AND AT LEAST ONE OF A DEVICE ORIENTATION PARAMETER AND A DEVICE DISTANCE PARAMETER FOR EACH DEVICE
206
PROVIDING A DEVICE SPACE DISTANCE PARAMETER VALUE
208
DETERMINING, BY THE CONTROL DEVICE, A FLOORPLAN OF THE BUILDING FROM THE DEVICE SPACE DISTANCE PARAMETER, THE DEVICE POSITION PARAMETER, THE DEVICE TYPE VALUE AND AT LEAST ONE OF A DEVICE ORIENTATION PARAMETER AND A DEVICE DISTANCE PARAMETER
210
ASSIGN, BY THE CONTROL DEVICE, THE PLURALITY OF DEVICES TO SPACES IN THE FLOORPLAN


200

**FIG.4**

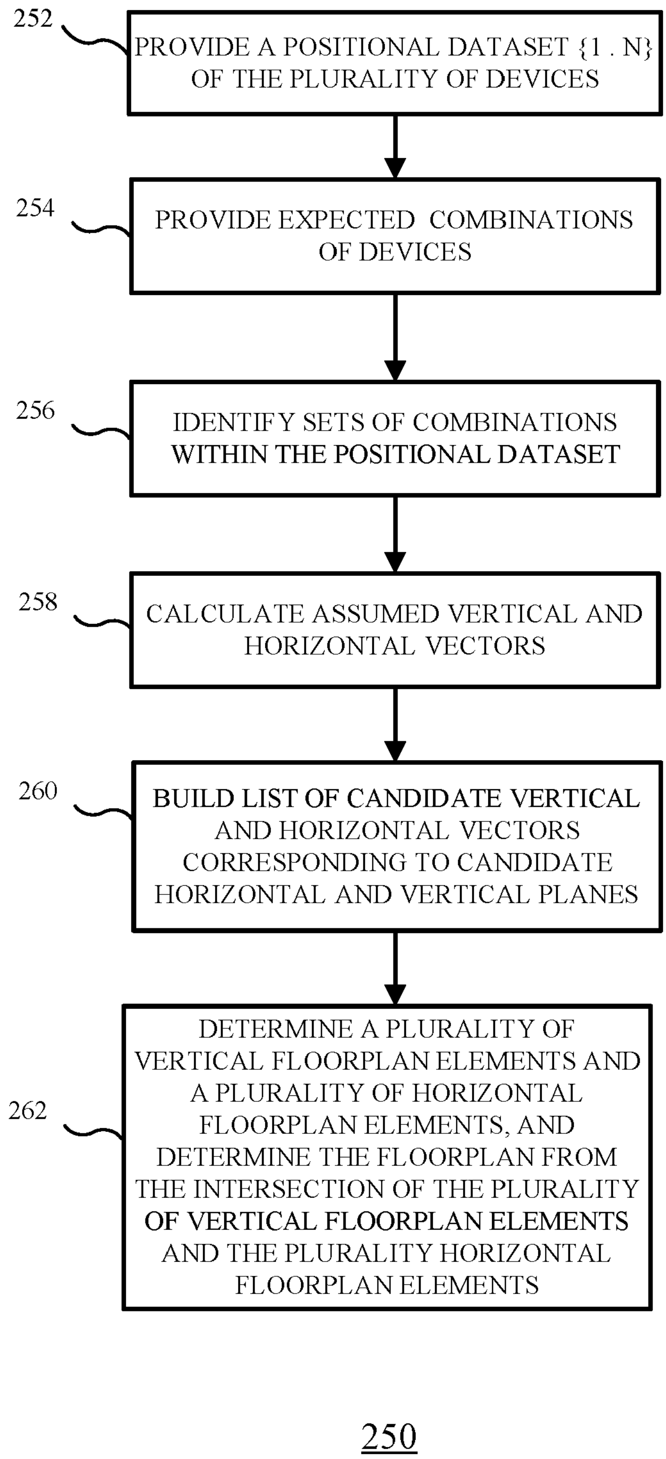
252
PROVIDE A POSITIONAL DATASET {1 . N} OF THE PLURALITY OF DEVICES
254
PROVIDE EXPECTED COMBINATIONS OF DEVICES
256
IDENTIFY SETS OF COMBINATIONS WITHIN THE POSITIONAL DATASET
258
CALCULATE ASSUMED VERTICAL AND HORIZONTAL VECTORS
260
BUILD LIST OF CANDIDATE VERTICAL AND HORIZONTAL VECTORS CORRESPONDING TO CANDIDATE HORIZONTAL AND VERTICAL PLANES
262
DETERMINE A PLURALITY OF VERTICAL FLOORPLAN ELEMENTS AND A PLURALITY OF HORIZONTAL FLOORPLAN ELEMENTS, AND DETERMINE THE FLOORPLAN FROM THE INTERSECTION OF THE PLURALITY OF VERTICAL FLOORPLAN ELEMENTS AND THE PLURALITY HORIZONTAL FLOORPLAN ELEMENTS
250

FIG. 5

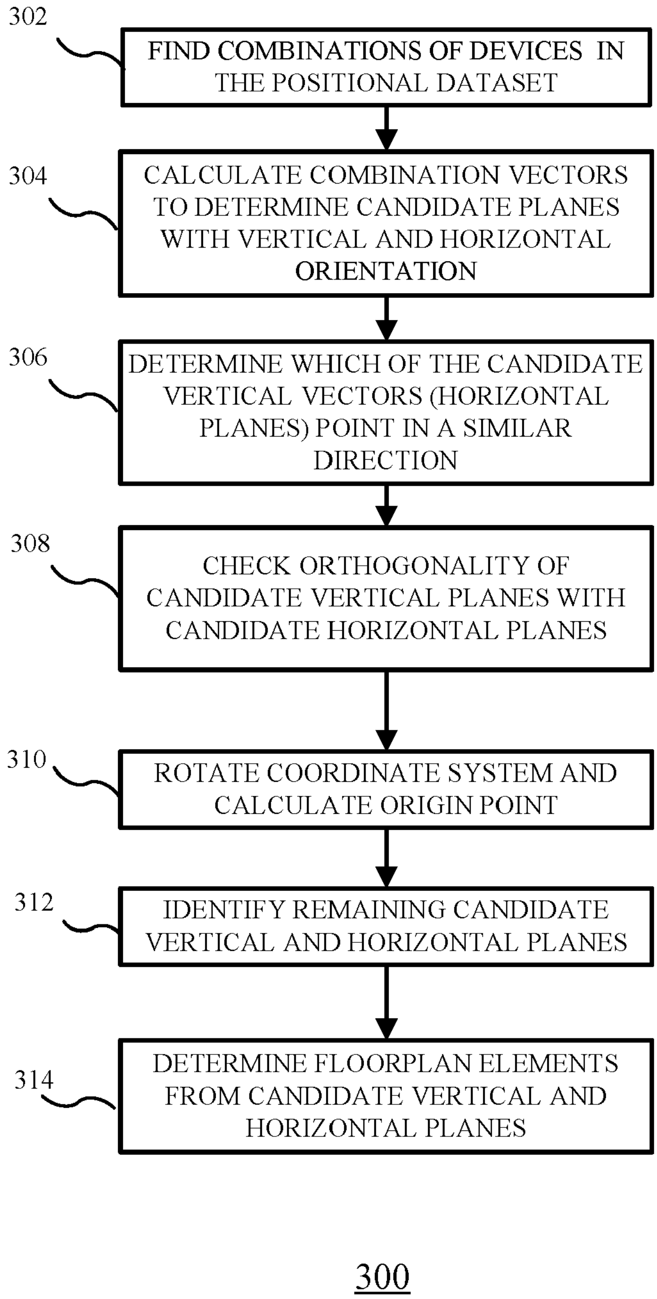
302
FIND COMBINATIONS OF DEVICES IN THE POSITIONAL DATASET
304
CALCULATE COMBINATION VECTORS TO DETERMINE CANDIDATE PLANES WITH VERTICAL AND HORIZONTAL ORIENTATION
306
DETERMINE WHICH OF THE CANDIDATE VERTICAL VECTORS (HORIZONTAL PLANES) POINT IN A SIMILAR DIRECTION
308
CHECK ORTHOGONALITY OF CANDIDATE VERTICAL PLANES WITH CANDIDATE HORIZONTAL PLANES
310
ROTATE COORDINATE SYSTEM AND CALCULATE ORIGIN POINT
312
IDENTIFY REMAINING CANDIDATE VERTICAL AND HORIZONTAL PLANES
314
DETERMINE FLOORPLAN ELEMENTS FROM CANDIDATE VERTICAL AND HORIZONTAL PLANES
300

FIG. 6

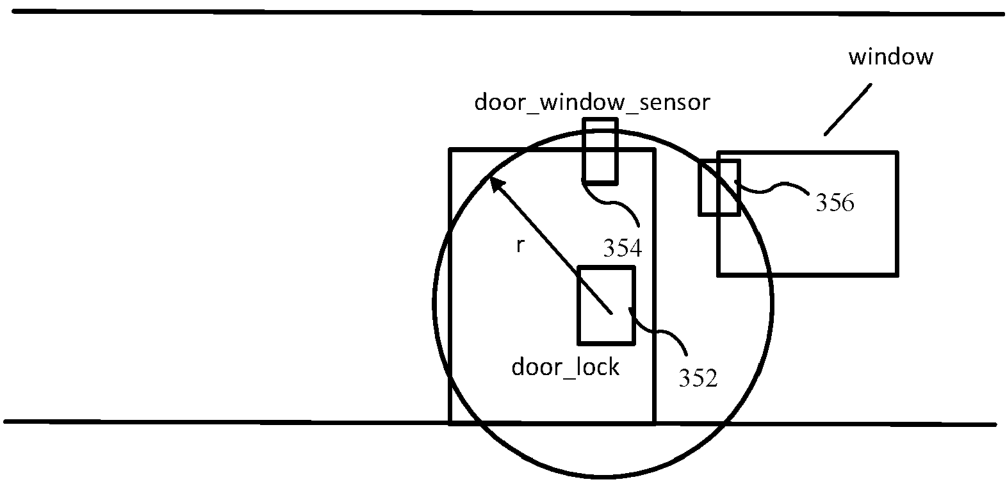


350

FIG. 7

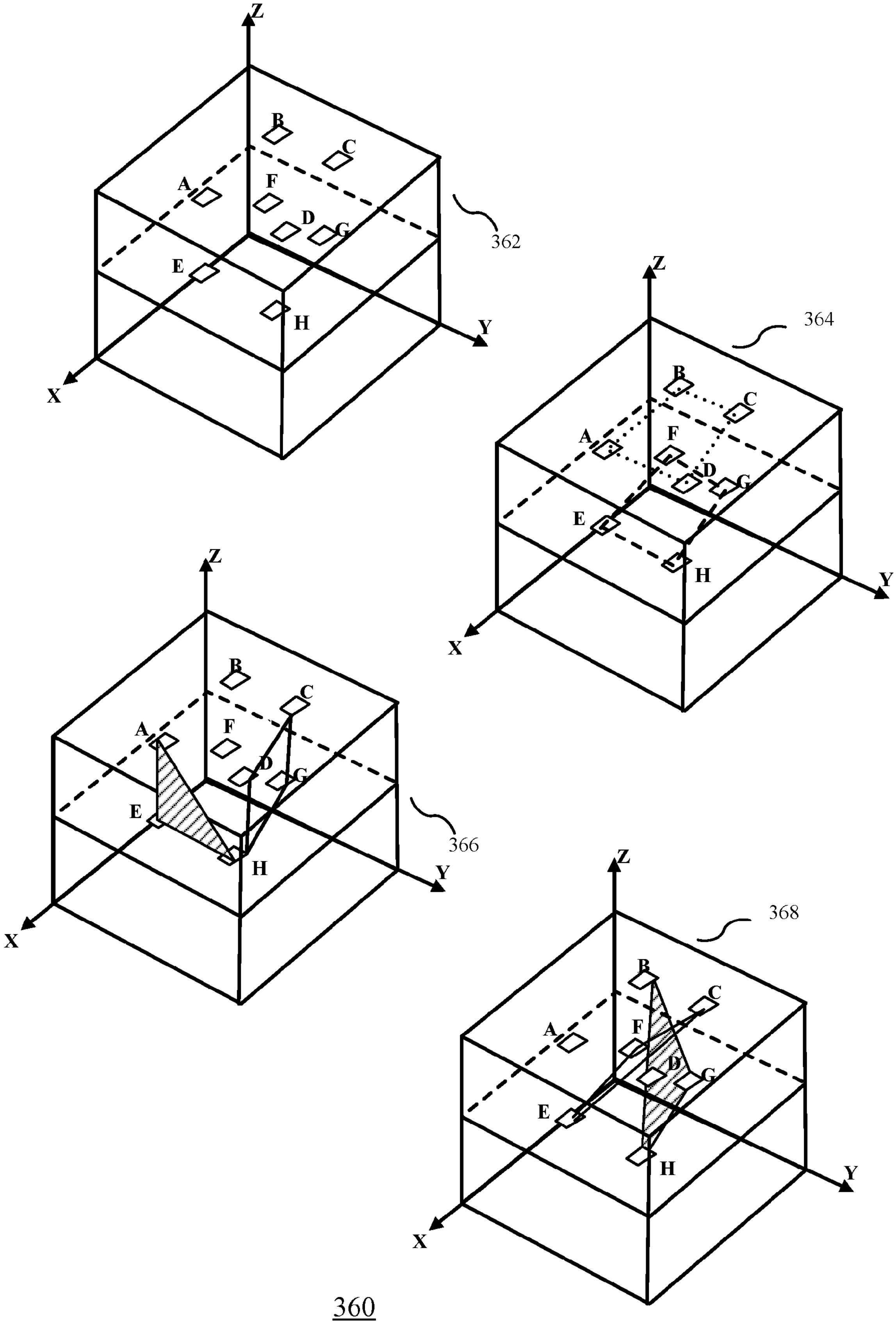
Z
B
C
A
F
D
G
362
E
H
Y
X
Z
364
B
C
A
F
D
G
E
H
Y
X
Z
B
C
A
F
D
G
E
366
H
Y
X
Z
368
B
C
A
F
D
G
E
H
Y
X

360

**FIG. 8**

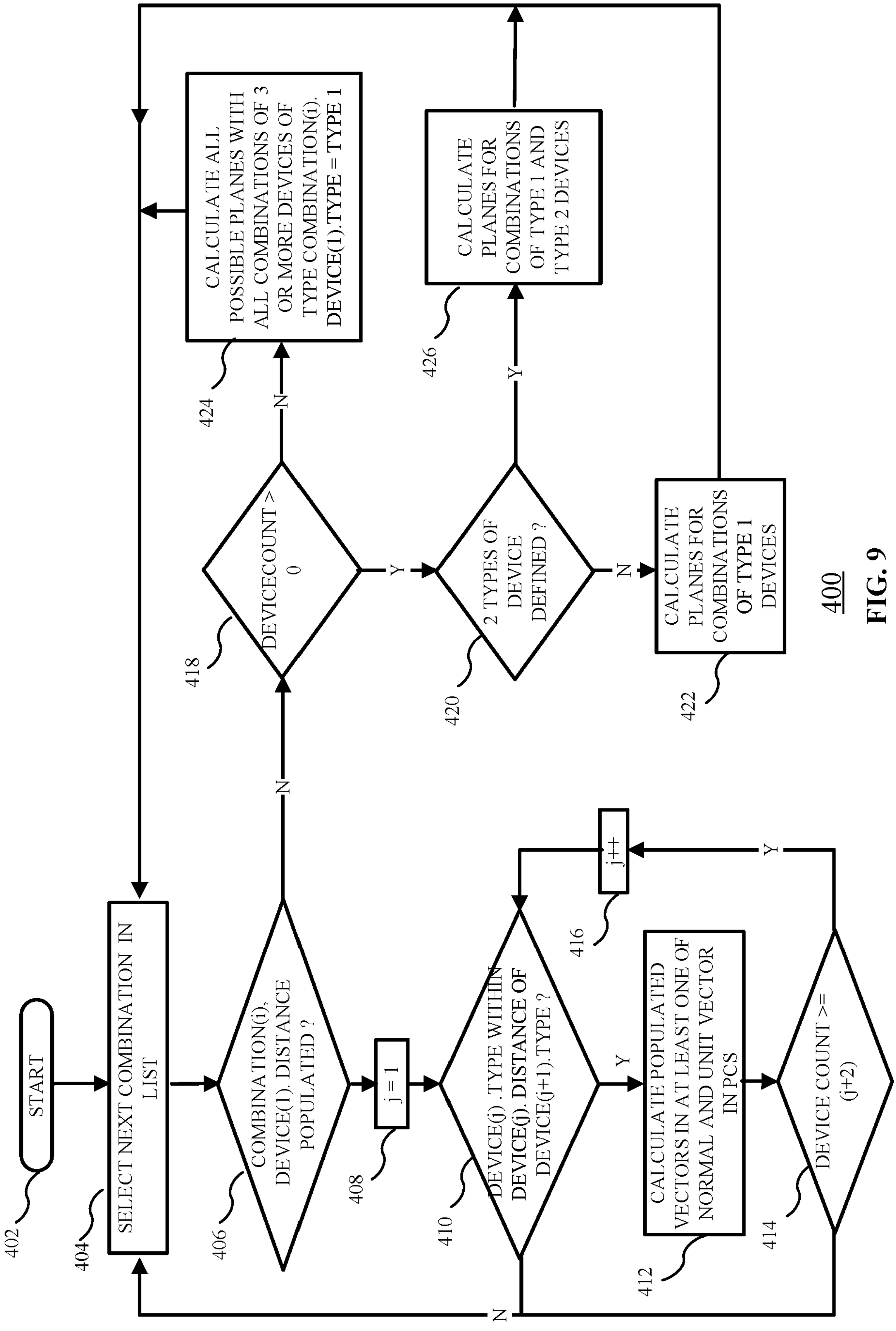
START
402
SELECT NEXT COMBINATION IN LIST
404
COMBINATION(i), DEVICE(1). DISTANCE POPULATED ?
406
N
DEVICECOUNT > 0
418
N
CALCULATE ALL POSSIBLE PLANES WITH ALL COMBINATIONS OF 3 OR MORE DEVICES OF TYPE COMBINATION(i). DEVICE(1).TYPE = TYPE 1
424
Y
2 TYPES OF DEVICE DEFINED ?
420
Y
CALCULATE PLANES FOR COMBINATIONS OF TYPE 1 AND TYPE 2 DEVICES
426
N
CALCULATE PLANES FOR COMBINATIONS OF TYPE 1 DEVICES
422
j = 1
408
DEVICE(j) .TYPE WITHIN DEVICE(j). DISTANCE OF DEVICE(j+1).TYPE ?
410
Y
CALCULATE POPULATED VECTORS IN AT LEAST ONE OF NORMAL AND UNIT VECTOR IN PCS
412
DEVICE COUNT >= (j+2)
414
Y
j++
416
N
400

FIG. 9

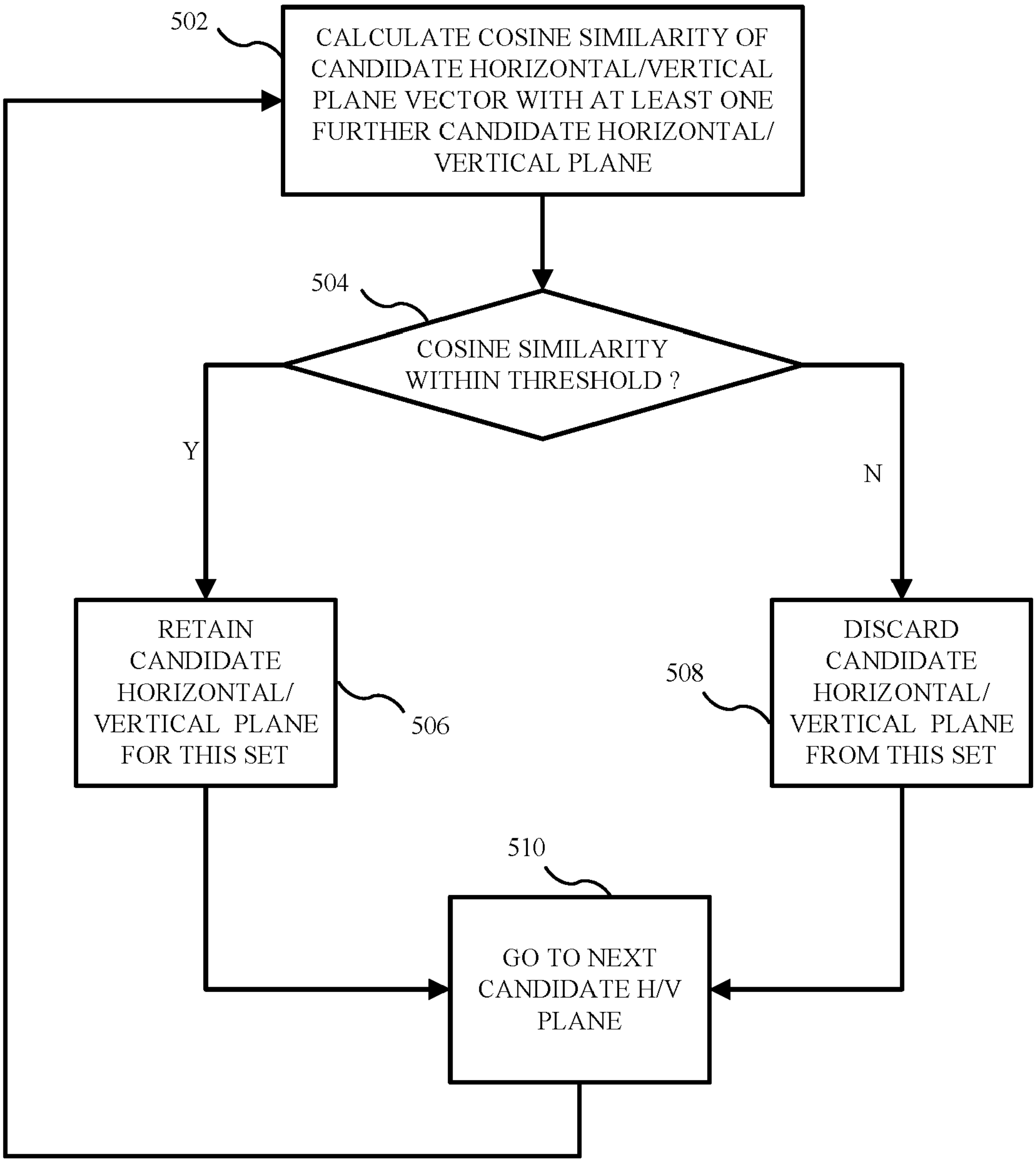
502
CALCULATE COSINE SIMILARITY OF CANDIDATE HORIZONTAL/VERTICAL PLANE VECTOR WITH AT LEAST ONE FURTHER CANDIDATE HORIZONTAL/ VERTICAL PLANE
504
COSINE SIMILARITY WITHIN THRESHOLD ?
Y
N
RETAIN CANDIDATE HORIZONTAL/ VERTICAL PLANE FOR THIS SET
506
508
DISCARD CANDIDATE HORIZONTAL/ VERTICAL PLANE FROM THIS SET
510
GO TO NEXT CANDIDATE H/V PLANE

500

**FIG. 10**

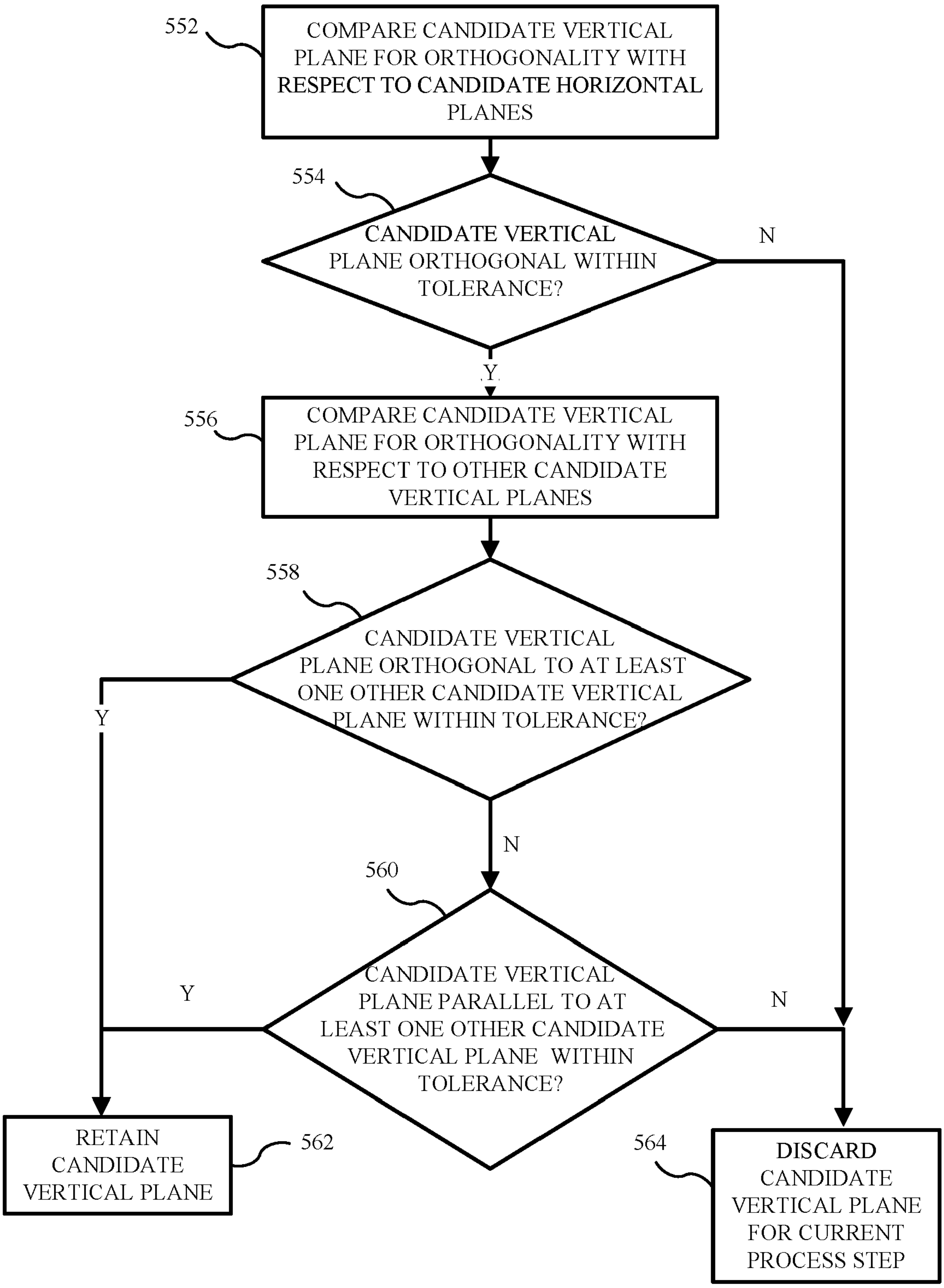
552
COMPARE CANDIDATE VERTICAL PLANE FOR ORTHOGONALITY WITH RESPECT TO CANDIDATE HORIZONTAL PLANES
554
CANDIDATE VERTICAL PLANE ORTHOGONAL WITHIN TOLERANCE?
N
Y
556
COMPARE CANDIDATE VERTICAL PLANE FOR ORTHOGONALITY WITH RESPECT TO OTHER CANDIDATE VERTICAL PLANES
558
CANDIDATE VERTICAL PLANE ORTHOGONAL TO AT LEAST ONE OTHER CANDIDATE VERTICAL PLANE WITHIN TOLERANCE?
Y
N
560
CANDIDATE VERTICAL PLANE PARALLEL TO AT LEAST ONE OTHER CANDIDATE VERTICAL PLANE WITHIN TOLERANCE?
Y
N
RETAIN CANDIDATE VERTICAL PLANE
562
564
DISCARD CANDIDATE VERTICAL PLANE FOR CURRENT PROCESS STEP

550

FIG. 11

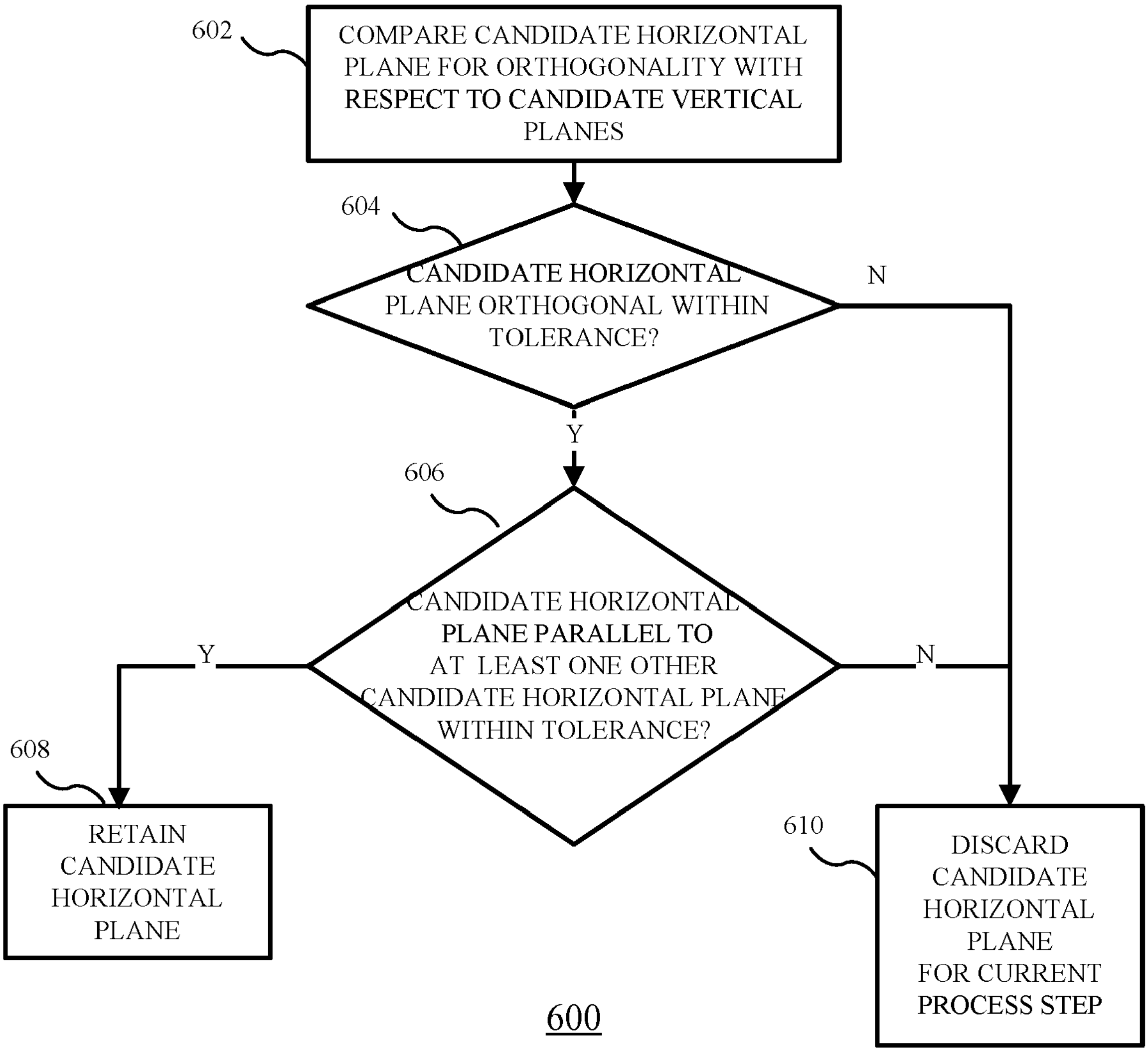
602
COMPARE CANDIDATE HORIZONTAL PLANE FOR ORTHOGONALITY WITH RESPECT TO CANDIDATE VERTICAL PLANES
604
CANDIDATE HORIZONTAL PLANE ORTHOGONAL WITHIN TOLERANCE?
N
Y
606
CANDIDATE HORIZONTAL PLANE PARALLEL TO AT LEAST ONE OTHER CANDIDATE HORIZONTAL PLANE WITHIN TOLERANCE?
Y
N
608
RETAIN CANDIDATE HORIZONTAL PLANE
610
DISCARD CANDIDATE HORIZONTAL PLANE FOR CURRENT PROCESS STEP
600

FIG. 12

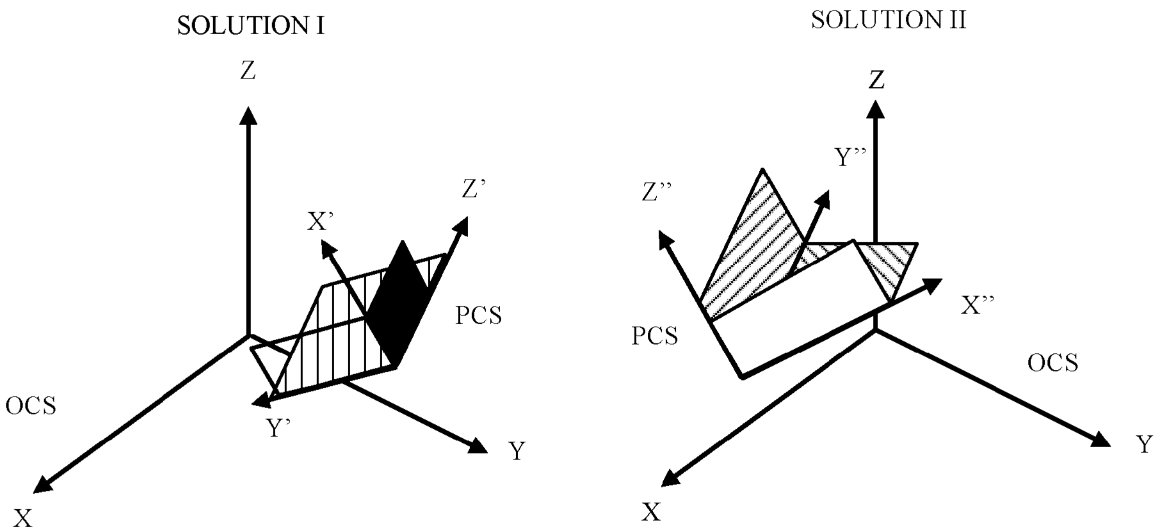


650

**FIG. 13**

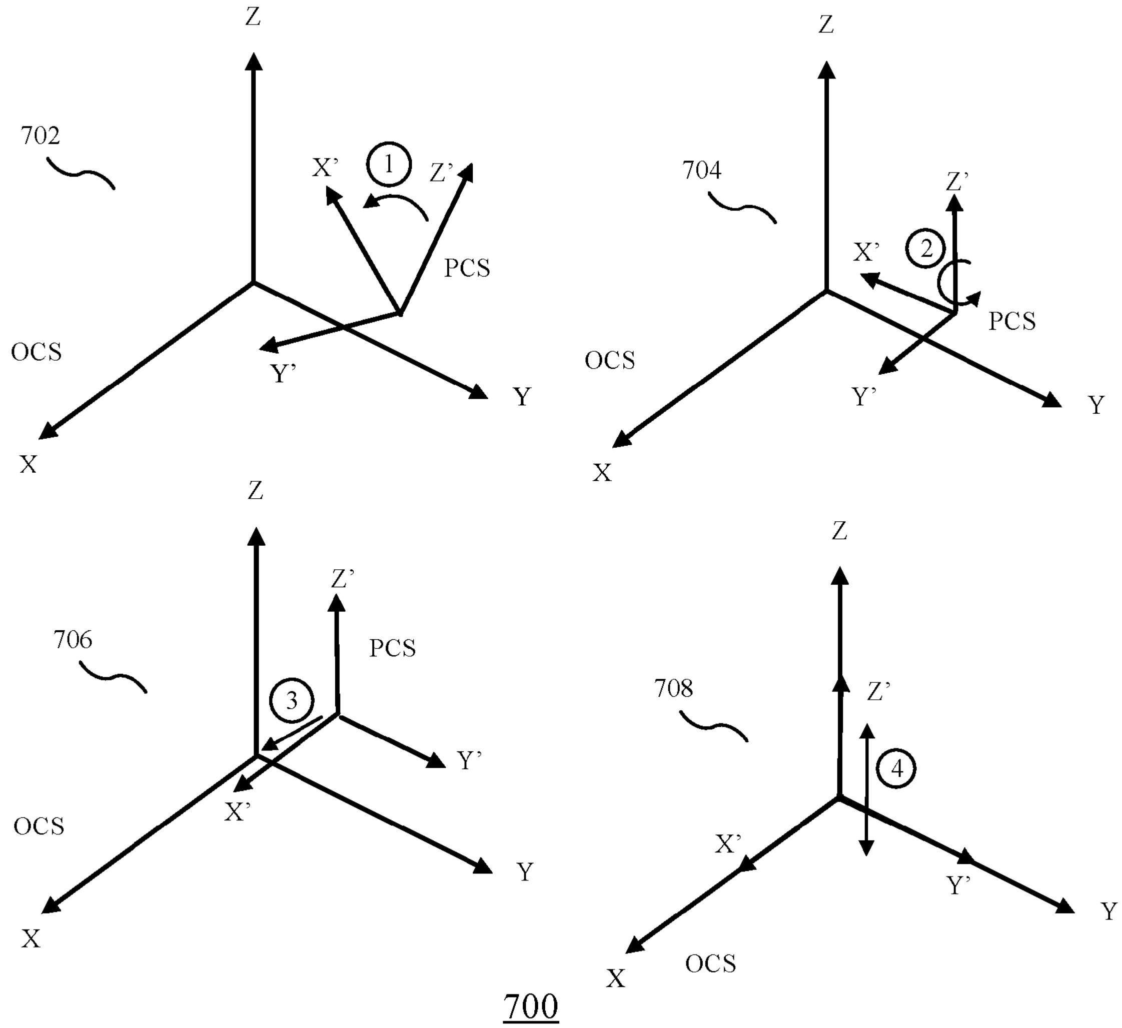


700

**FIG. 14A**

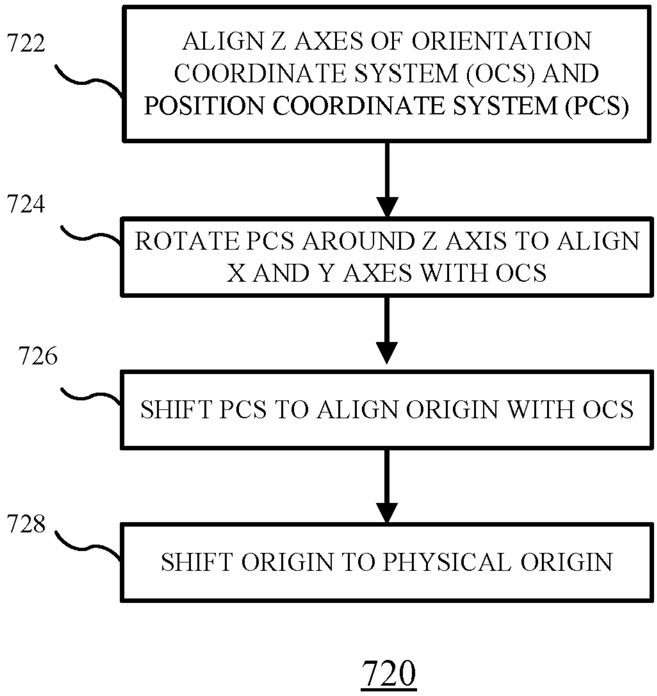
722
ALIGN Z AXES OF ORIENTATION COORDINATE SYSTEM (OCS) AND POSITION COORDINATE SYSTEM (PCS)
724
ROTATE PCS AROUND Z AXIS TO ALIGN X AND Y AXES WITH OCS
726
SHIFT PCS TO ALIGN ORIGIN WITH OCS
728
SHIFT ORIGIN TO PHYSICAL ORIGIN
720

FIG. 14B

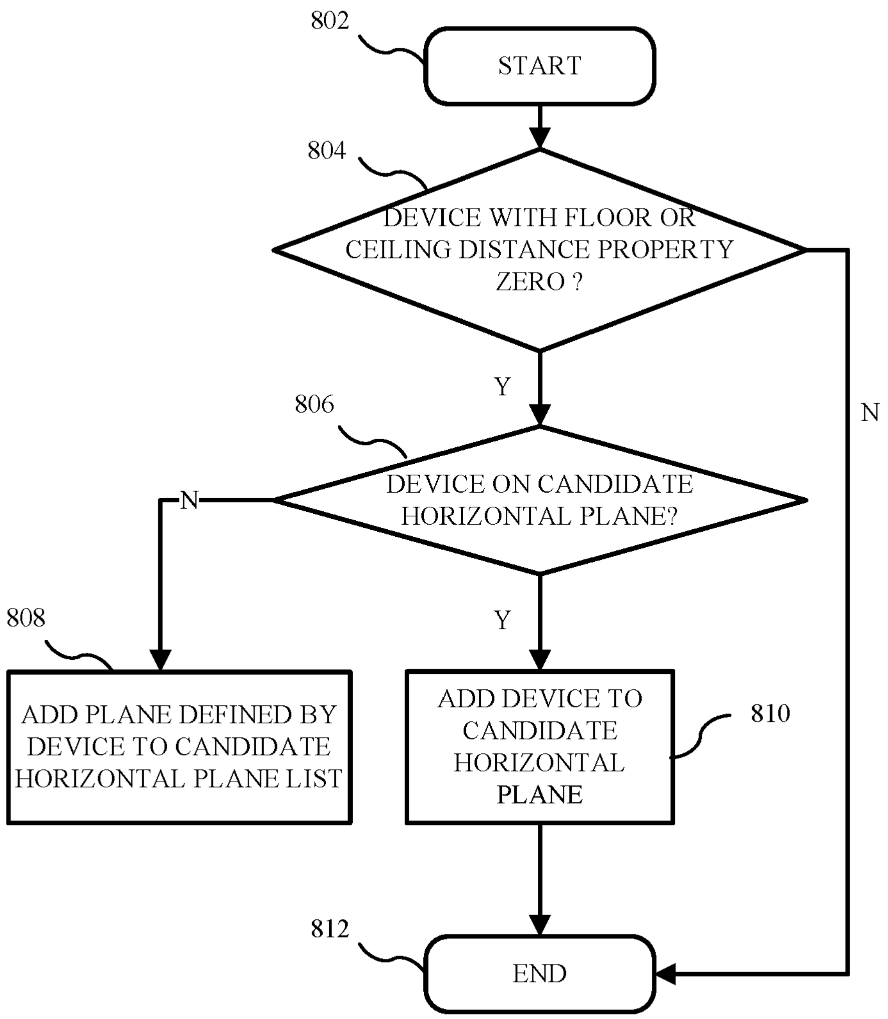
802
START
804
DEVICE WITH FLOOR OR CEILING DISTANCE PROPERTY ZERO ?
Y
N
806
DEVICE ON CANDIDATE HORIZONTAL PLANE?
N
Y
808
ADD PLANE DEFINED BY DEVICE TO CANDIDATE HORIZONTAL PLANE LIST
ADD DEVICE TO CANDIDATE HORIZONTAL PLANE
810
812
END

800

**FIG. 15**

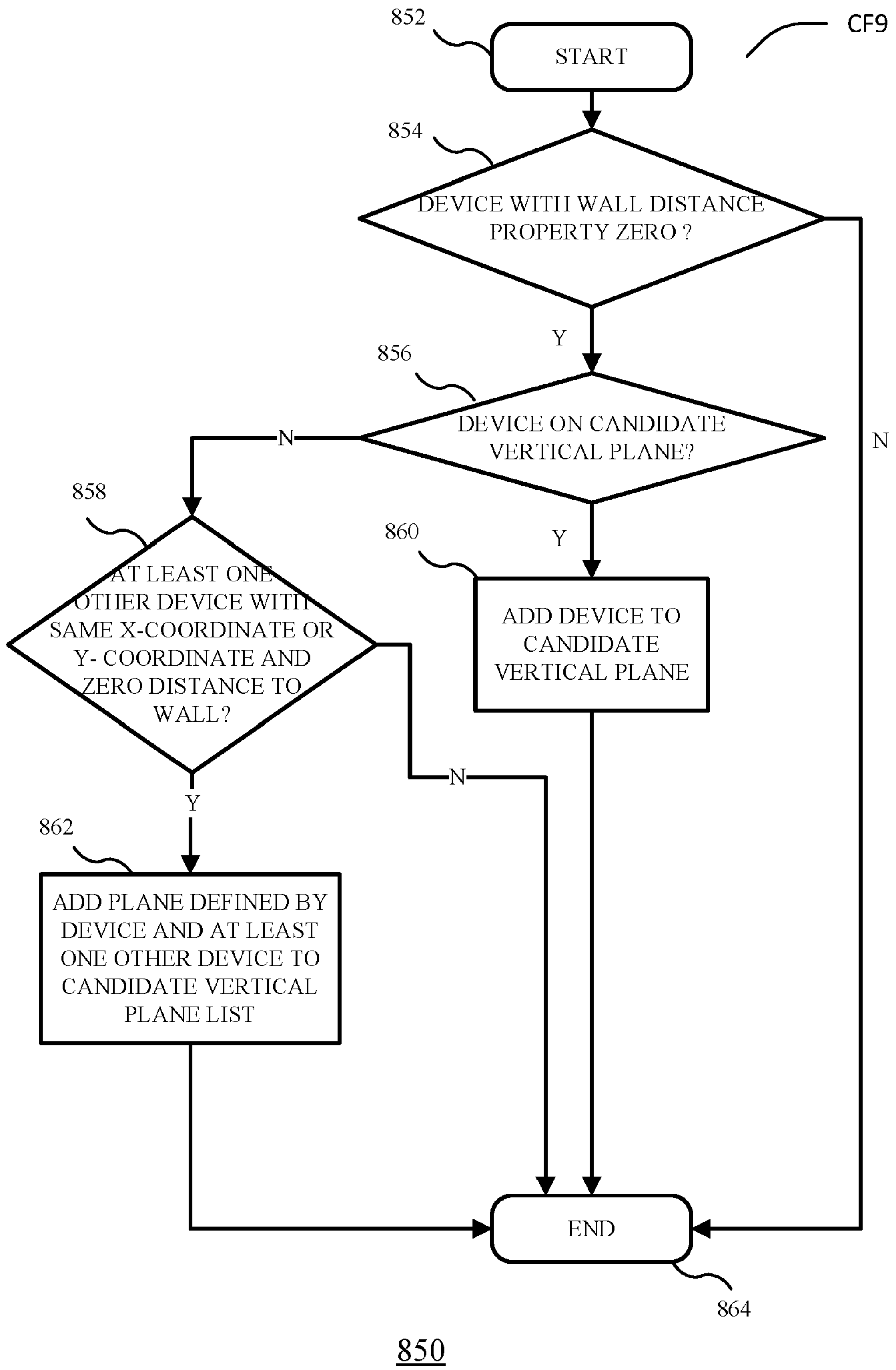
852
START
CF9
854
DEVICE WITH WALL DISTANCE PROPERTY ZERO ?
Y
N
856
DEVICE ON CANDIDATE VERTICAL PLANE?
N
858
AT LEAST ONE OTHER DEVICE WITH SAME X-COORDINATE OR Y- COORDINATE AND ZERO DISTANCE TO WALL?
860
Y
ADD DEVICE TO CANDIDATE VERTICAL PLANE
N
Y
862
ADD PLANE DEFINED BY DEVICE AND AT LEAST ONE OTHER DEVICE TO CANDIDATE VERTICAL PLANE LIST
END
864
850

FIG. 16

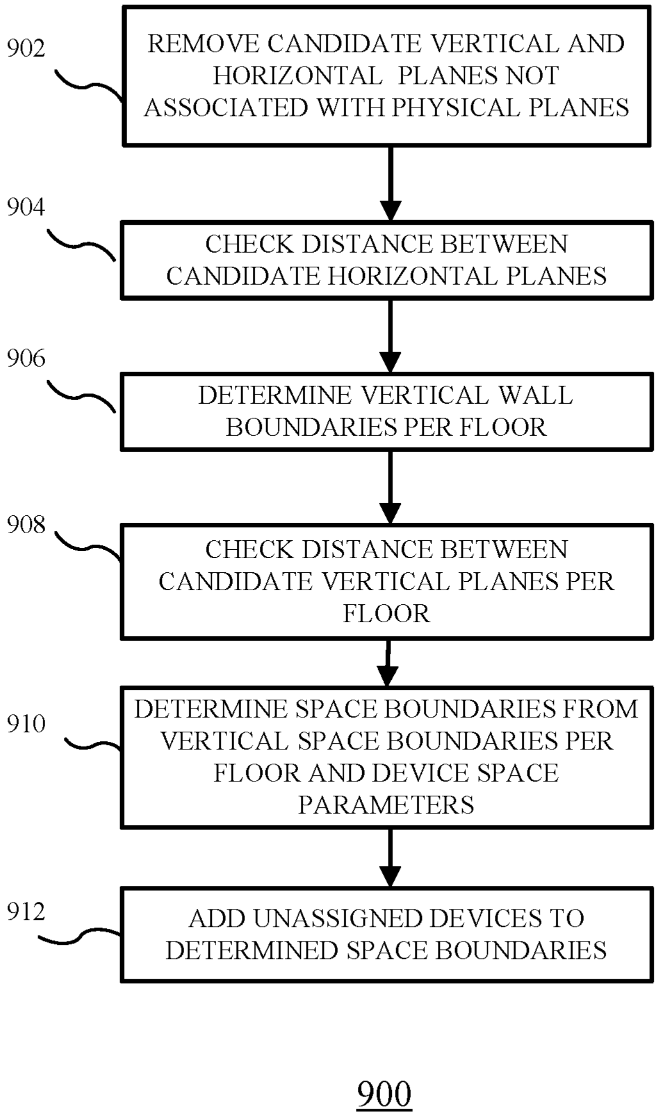
902
REMOVE CANDIDATE VERTICAL AND HORIZONTAL PLANES NOT ASSOCIATED WITH PHYSICAL PLANES
904
CHECK DISTANCE BETWEEN CANDIDATE HORIZONTAL PLANES
906
DETERMINE VERTICAL WALL BOUNDARIES PER FLOOR
908
CHECK DISTANCE BETWEEN CANDIDATE VERTICAL PLANES PER FLOOR
910
DETERMINE SPACE BOUNDARIES FROM VERTICAL SPACE BOUNDARIES PER FLOOR AND DEVICE SPACE PARAMETERS
912
ADD UNASSIGNED DEVICES TO DETERMINED SPACE BOUNDARIES
900

FIG. 17

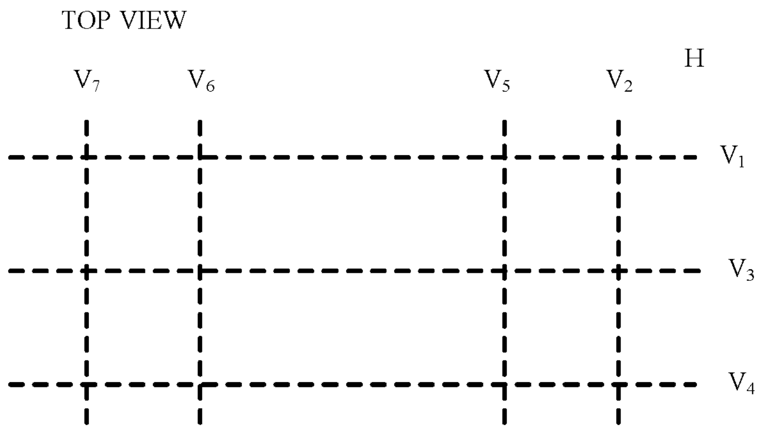


910

**FIG. 18A**

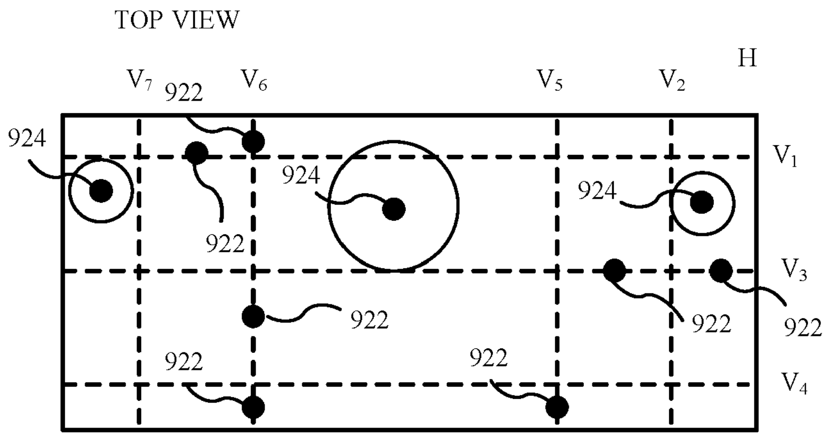


920

**FIG. 18B**

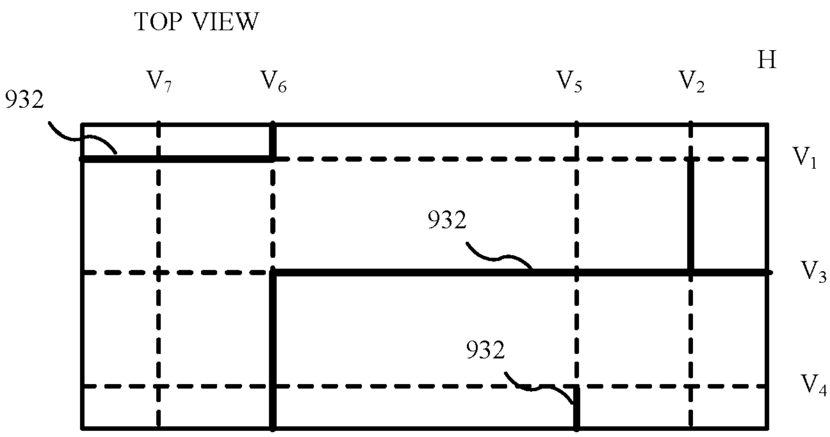


930

**FIG. 18C**

TOP VIEW

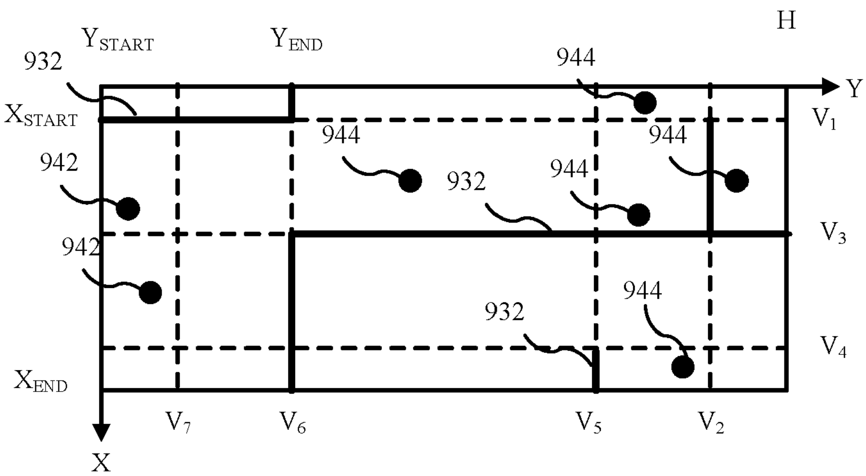


940

**FIG. 18D**

Europäisches Patentamt
European Patent Office
Office européen des brevets

# EUROPEAN SEARCH REPORT

Application Number
EP 24 17 7255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/183257 A1 (APPLE INC [US]) 26 September 2019 (2019-09-26) * paragraphs [0037] - [0042], [0058], [0066] - [0074] * ----- | 1-15 | INV. H04W4/02 H04W4/33 H04W4/70 |
| A | US 9 661 120 B1 (SKEFFINGTON MICHAEL [US]) 23 May 2017 (2017-05-23) * column 4, last paragraph - column 5, paragraph 1 * * column 24, line 41 - line 57 * ----- | 1-15 | |

TECHNICAL FIELDS SEARCHED (IPC)

H04W

The present search report has been drawn up for all claims

1

| Place of search | Date of completion of the search | Examiner |
|---|---|---|
| The Hague | 17 October 2024 | Blanco Cardona, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 7255

This annex lists the patent family members relating to the patent documents cited in the above-mentioned European search report. The members are as contained in the European Patent Office EDP file on
The European Patent Office is in no way liable for these particulars which are merely given for the purpose of information.

17-10-2024

| Patent document cited in search report | Publication date | Patent family member(s) | Publication date |
|---|---|---|---|
| WO 2019183257 A1 | 26-09-2019 | US 2019296506 A1 | 26-09-2019 |
| | | WO 2019183257 A1 | 26-09-2019 |
| US 9661120 B1 | 23-05-2017 | US 9521009 B1 | 13-12-2016 |
| | | US 9661120 B1 | 23-05-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 23190216